(19) Europäisches Patentamt
European Patent Office
Office européen des brevets

(11) **EP 2 596 893 A1**

(12) **EUROPÄISCHE PATENTANMELDUNG**

(43) Veröffentlichungstag:
**29.05.2013 Patentblatt 2013/22**

(51) Int Cl.:
**B23F 5/16** *(2006.01)*   **B23F 21/04** *(2006.01)*

(21) Anmeldenummer: **11190771.3**

(22) Anmeldetag: **25.11.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Klingelnberg AG**
**8050 Zürich (CH)**

(72) Erfinder: **Vogel, Olaf**
**76275 Ettlingen (DE)**

(74) Vertreter: **OK pat AG**
**Chamerstrasse 50**
**6300 Zug (CH)**

(54) **Semi-Completing-Wälzschälverfahren mit zwei Achskreuzwinkeln und Verwendung eines entsprechenden Wälzschälwerkzeugs zum Semi-Completing-Wälzschälen**

(57)   Kennzeichnend für das Verfahren der Erfindung ist, dass es zum Wälzschälen eines Werkstücks (50.1) mit einer Werkstück-Rotationsachse (R2) und mit einer rotationssymmetrischen, periodischen Struktur unter Einsatz eines Wälzschälwerkzeugs (100.3) ausgelegt ist Es umfasst die folgenden Schritte:
- Bereitstellen des Werkstücks (50.1),
- Bereitstellen des Wälzschälwerkzeugs (100.3), das mehrere Schneidzähne (111) aufweist,
■ Anfahren einer ersten Relativposition mit einem ersten Achskreuzwinkel des Wälzschälwerkzeugs (100.3) in Bezug zum Werkstück (50.1),
■ Ausführen einer ersten Wälzschälbearbeitung des Werkstücks (50.1), wobei während der ersten Wälzschälbearbeitung entweder alle rechten Flanken oder alle linken Flanken der periodischen Struktur des Werkstücks (50.1) fertig bearbeitet und die jeweils anderen Flanken vorbearbeitet oder nicht bearbeitet werden,
■ Anfahren einer zweiten Relativposition mit einem zweiten Achskreuzwinkel des Wälzschälwerkzeugs (100.3) in Bezug zum Werkstück (50.1), wobei der zweite Achskreuzwinkel als Winkel mit einem zweiten Betrag gegenüber der Werkstück-Rotationsachse (R2) definiert ist,
■ Ausführen einer zweiten Wälzschälbearbeitung des Werkstücks (50.1), wobei während der zweiten Wälzschälbearbeitung diejenigen Flanken der periodischen Struktur des Werkstücks (50.1) fertig bearbeitet werden, die zuvor während der ersten Wälzschälbearbeitung nur vorbearbeitet oder nicht bearbeitet wurden.

Fig. 6A

Fig. 6B

EP 2 596 893 A1

**Beschreibung**

Gebiet der Erfindung

Gegenstand der Erfindung ist ein Verfahren zum Semi-Completing-Wälzschälen einer Verzahnung oder einer anderen periodischen Struktur und ein entsprechendes Wälzschälwerkzeug zum Ausführen eines Semi-Completing-Wälzschälverfahrens.

Hintergrund der Erfindung, Stand der Technik

Es gibt zahlreiche Verfahren zur Fertigung von Zahnrädern. Bei der spanenden Weichvorbearbeitung unterscheidet man Wälzfräsen (im Englischen hobbing genannt), Wälzstossen (im Englischen gear shaping genannt), Wälzhobeln (im Englischen generating planing genannt) und Wälzschälen (im Englischen power skiving genannt). Das Wälzfräsen und Wälzschälen sind sogenannte kontinuierliche Verfahren, wie im Folgenden näher erläutert wird.

Bei der spanenden Herstellung von Zahnrädern unterscheidet man zwischen dem Einzelteilverfahren (auch intermittierendes Teilverfahren und im Englischen intermitted indexing process oder single indexing process genannt) und dem kontinuierlichen Verfahren, das teilweise auch als kontinuierliches Teilungsverfahren (im Englischen continuous indexing process, oder face hobbing genannt) bezeichnet wird.

Beim kontinuierlichen Verfahren kommt beispielsweise ein Werkzeug mit entsprechenden Messern zum Einsatz, um die Flanken eines Werkstücks zu schneiden. Das Werkstück wird in einer Aufspannung kontinuierlich, d.h. im pausenlosen Verfahren fertig geschnitten. Das kontinuierliche Verfahren basiert auf komplexen, gekoppelten Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten, respektive gekoppelten Antreiben mehrere Achsantriebe einer entsprechenden Maschine.

Beim Einzelteilverfahren wird eine Zahnlücke bearbeitet, dann erfolgen zum Beispiel eine relative Bewegung des Werkzeugs und eine sogenannte Teilungsbewegung (Teilungsdrehung), bei der sich das Werkstück relativ zum Werkzeug dreht, bevor dann die nächste Zahnlücke bearbeitet wird. Es wird so Schritt für Schritt ein Zahnrad gefertigt.

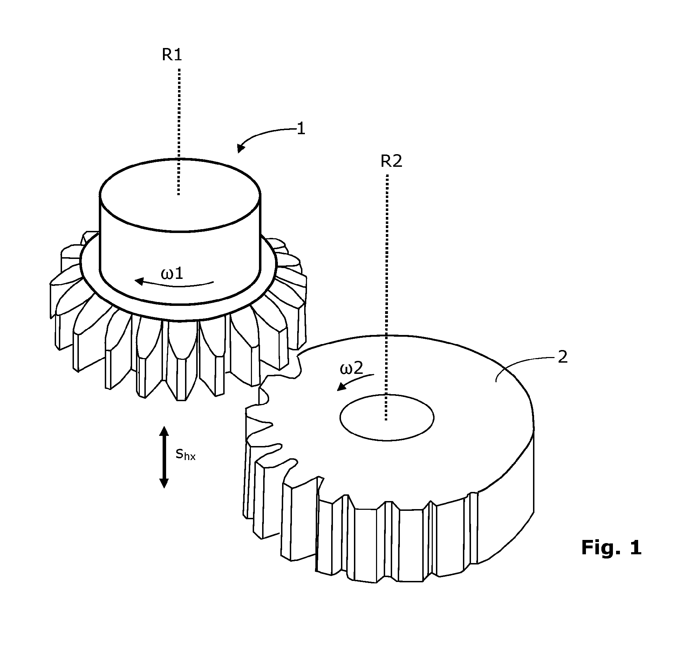

Das eingangs genannte Wälzstossverfahren kann durch ein Zylinderradgetriebe beschrieben oder dargestellt werden, da der Kreuzungswinkel (auch Achskreuzwinkel genannt) zwischen der Rotationsachse R1 des Stosswerkzeugs 1 und der Rotationsachse R2 des Werkstücks 2 Null Grad beträgt, wie in Fig. 1 schematisch dargestellt. Die beiden Rotationsachsen R1 und R2 verlaufen parallel, wenn der Achskreuzwinkel Null Grad beträgt. Das Werkstück 2 und das Stosswerkzeug 1 drehen sich kontinuierlich um ihre Rotationsachsen R2, bzw. R1. Das Stosswerkzeug 1 macht zusätzlich zu der Drehbewegung eine Hubbewegung, die in Fig. 1 durch den Doppelpfeil $S_{hx}$ bezeichnet ist, und nimmt bei dieser Hubbewegung Späne vom Werkstück 2 ab.

Vor einiger Zeit wurde ein Verfahren erneut aufgegriffen, das als Wälzschälen bezeichnet wird. Die Grundlagen sind circa 100 Jahre alt. Eine erste Patentanmeldung mit der Nummer DE 243514 zu diesem Thema geht auf das Jahr 1910 zurück und wurde im Jahr 1912 herausgegeben. Nach den ursprünglichen Überlegungen und Untersuchungen der Anfangsjahre wurde das Wälzschälen nicht mehr ernsthaft weiter verfolgt. Es waren bisher aufwendige Prozesse, die teilweise empirisch waren, notwendig, um eine geeignete Werkzeuggeometrie für das Wälzschälverfahren zu finden.

Ungefähr Mitte der 1980er Jahre wurde das Wälzschälen erneut aufgegriffen. Erst mit den heutigen Simulationsverfahren und den modernen CNC-Steuerungen der Maschinen, konnte das Prinzip des Wälzschälens in ein produktives, reproduzierbares und robustes Verfahren umgesetzt werden. Hinzu kommen die hohe Verschleißfestigkeit heutiger Werkzeugmaterialien, die enorm hohe statische und dynamische Steifigkeit und die hohe Güte des Synchronlaufs der modernen Maschinen.

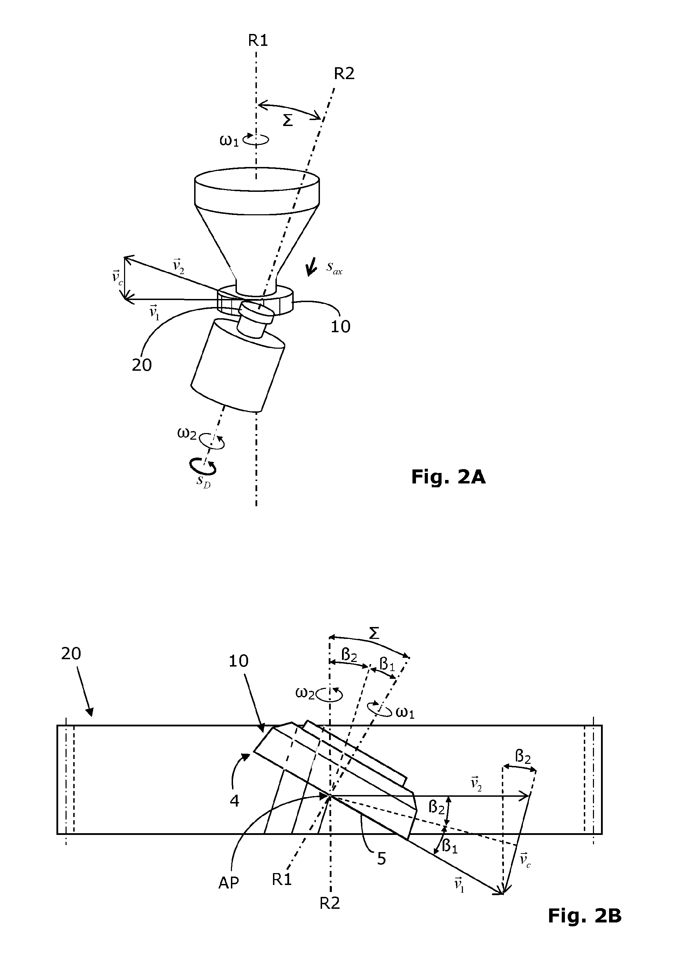

Beim Wälzschälen wird nun, wie in Fig. 2A gezeigt, ein Achskreuzwinkel $\Sigma$ zwischen der Rotationsachse R1 des Wälzschälwerkzeugs 10 (auch als Schälrad bezeichnet) und der Werkstück-Rotationsachse R2 des Werkstücks 20 vorgegeben, der ungleich Null ist. Die resultierende Relativbewegung zwischen dem Wälzschälwerkzeug 10 und dem Werkstück 20 ist eine Schraubbewegung, die in einen Drehanteil (rotatorischer Anteil) und einen Schubanteil (translatorischer Anteil) zerlegt werden kann. Als antriebstechnisches Analogon kann ein Wälzschraubgetriebe betrachtet werden, wobei der Drehanteil dem Wälzen und der Schubanteil dem Gleiten der Flanken entspricht. Um so größer der Achskreuzwinkel $\Sigma$ betragsmäßig ist, um so mehr nimmt der für die Bearbeitung des Werkstücks 20 notwendige translatorische Bewegungsanteil zu. Er bewirkt nämlich eine Bewegungskomponente der Flankenschneiden des Wälzschälwerkzeugs 10 in Richtung der Zahnflanken des Werkstücks 20. Beim Wälzschälen wird somit der Gleitanteil der kämmenden Relativbewegung der im Eingriff stehenden Zahnräder des Schraubradersatzgetriebes ausgenutzt, um die Schnittbewegung auszuführen. Beim Wälzschälen ist nur ein langsamer Axialvorschub $s_{ax}$ (auch axialer Vorschub genannt) parallel zur Rotationsachse R2 des Werkstücks 20 erforderlich und es entfällt die sogenannte Stossbewegung, die für das Wälzstossen typisch ist. Beim Wälzschälen tritt somit auch keine Rückhubbewegung auf.

Die Schnittgeschwindigkeit beim Wälzschälen wird direkt von der Drehzahl des Wälzschälwerkzeugs 10 bzw.

des Werkstücks 20 und von dem verwendeten Achskreuzwinkel $\Sigma$ der Rotationsachsen R1 und R2 beeinflusst. Der Achskreuzwinkel $\Sigma$ und damit der Gleitanteil sollte so gewählt werden, dass für die Bearbeitung des Materials bei gegebener Drehzahl eine optimale Schnittgeschwindigkeit erzielt wird.

Die Bewegungsabläufe und weitere Details eines vorbekannten Wälzschälverfahrens sind der bereits erwähnten schematischen Darstellung in Fig. 2A zu entnehmen. Fig. 2A zeigt das Wälzschälen einer Außenverzahnung an einem zylindrischen Werkstück 20. Das Werkstück 20 und das Werkzeug 10 (hier ein zylindrisches Wälzschälwerkzeug 10) rotieren in entgegengesetzter Richtung, wie in Fig. 2A z.B. anhand der Winkelgeschwindigkeiten $\omega_1$ und $\omega_2$ zu erkennen ist. Das zylindrische Werkzeug 10 ist zur Erzeugung kinematischer Freiwinkel vom Werkstück 20 weggeneigt.

Hinzu kommen weitere Relativbewegungen. Es ist der bereits erwähnte Axialvorschub $s_{ax}$ erforderlich, um die gesamte Verzahnbreite des Werkstücks 20 mit dem Werkzeug 10 bearbeiten zu können. Der Axialvorschub bewirkt eine Verschiebung des Werkzeugs 10 gegenüber dem Werkstück 20 in paralleler Richtung zur Werkstück-Rotationsachse R2. Die Richtung dieser Bewegung des Werkzeugs 10 ist in Fig. 2A mit $s_{ax}$ gekennzeichnet. Falls am Werkstück 20 eine Schrägverzahnung erwünscht ist (d.h. Schrägungswinkel $\beta_2 \neq 0$), wird dem Axialvorschub $S_{ax}$ ein Differentialvorschub $S_D$ überlagert, welcher, wie in Fig. 2A gekennzeichnet, einer zusätzlichen Drehung des Werkstücks 20 um die Werkstück-Rotationsachse R2 entspricht. Der Differentialvorschub $S_D$ und der Axialvorschub $s_{ax}$ werden am Auslegungspunkt AP derart aufeinander abgestimmt, dass der resultierende Vorschub des Werkzeugs 10 gegenüber dem Werkstück 20 in Richtung der zu erzeugenden Zahnlücke erfolgt. Zusätzlich kann ein Radialvorschub $S_{rad}$ eingesetzt werden, um etwa die Balligkeit der Verzahnung des Werkstücks 20 zu beeinflussen.

Beim Wälzschälen ergibt sich der Vektor der Schnittgeschwindigkeit $\vec{v}_c$ im Wesentlichen als Differenz der beiden um den effektiven Achskreuzwinkel $\Sigma_{eff}$ zueinander geneigten Geschwindigkeitsvektoren $\vec{v}_1$ und $\vec{v}_2$ der Rotationsachsen R1, R2 von Werkzeug 10 und Werkstück 20. $\vec{v}_1$ ist der Geschwindigkeitsvektor am Umfang des Werkzeugs 10 und $\vec{v}_2$ ist der Geschwindigkeitsvektor am Umfang des Werkstücks 20. Die Schnittgeschwindigkeit $v_c$ des Wälzschälprozesses kann durch den Achskreuzwinkel $\Sigma$ und die Drehzahl im Schraubradersatzgetriebe verändert werden. Der wie bereits erwähnt relativ langsame Axialvorschub $s_{ax}$ hat beim Wälzschälverfahren nur einen kleinen Einfluss auf die Schnittgeschwindigkeit $v_c$, der vernachlässigt werden kann. Deshalb ist der Axialvorschub $s_{ax}$ in dem Vektordiagramm mit den Vektoren $\vec{v}_1$, $\vec{v}_2$ und $\vec{v}_c$ in Fig. 2A nicht berücksichtigt.

In Fig. 2B ist das Wälzschälen einer Außenverzahnung eines Werkstücks 20 mit einem ungeneigten konischen Wälzschälwerkzeug 10 gezeigt. In Fig. 2B sind wiederum der Achskreuzwinkel $\Sigma$, der Vektor der Schnittgeschwindigkeit $\vec{v}_c$, die Geschwindigkeitsvektoren $\vec{v}_1$ am Umfang des Werkzeugs 10 und $\vec{v}_2$ am Umfang des Werkstücks 20, sowie der Schrägungswinkels $\beta$, des Werkzeugs 10 und der Schrägungswinkel $\beta_2$ des Werkstücks 20 gezeigt. Der Schrägungswinkel $\beta_2$ ist hier ungleich Null. Der Zahnkopf des Werkzeugs 10 ist in Fig. 2B mit dem Bezugszeichen 4 gekennzeichnet. Die Zahnbrust ist in Fig. 2B mit dem Bezugszeichen 5 gekennzeichnet. Die beiden Rotationsachsen R1 und R2 schneiden sich nicht, sondern sind windschief zueinander angeordnet. Bei einem konischen Wälzschälwerkzeug 10 wird der Auslegungspunkt AP üblicherweise auf dem Gemeinlot der beiden Rotationsachsen R1 und R2 gewählt, da ein Ankippen des Wälzschälwerkzeugs 10 zur Beschaffung von Freiwinkeln nicht notwendig ist. In dem Auslegungspunkt AP berühren sich die Wälzkreise des Schraubwälzersatzgetriebes.

Beim Wälzschälen kommt ein Werkzeug 10 zum Einsatz, das mindestens eine geometrisch bestimmte Flankenschneide umfasst. Die Flankenschneide/Flankenschneiden sind in Fig. 2A und Fig. 2B nicht gezeigt. Die Form und Anordnung der Flankenschneiden gehören zu denjenigen Aspekten, die in der Praxis bei einer konkreten Auslegung berücksichtigt werden müssen.

Ausserdem kommt dem Werkzeug selbst beim Wälzschälen eine große Bedeutung zu. Das Wälzschälwerkzeug 10 hat in dem in Fig. 2A gezeigten Beispiel die Form eines geradverzahnten Stirnrads. Die Außenkontur des Grundkörpers in Fig. 2A ist zylindrisch. Sie kann aber auch kegelig (auch konisch genannt) sein, wie in Fig. 2B gezeigt.

Es ist bekannt (siehe z.B. Offenlegungsschrift DE 3915976 A1), dass man beim Wälzschälen einen sogenannte Semi-Completing Ansatz verfolgen kann. Als Semi-Completing-Verfahren wird ein Ansatz bezeichnet, bei dem die rechten Flanken und linken Flanken des Werkstücks in getrennten Arbeitsgängen fertig gestellt werden. Hierbei werden in einem ersten Schritt nur die Geometrien der rechten oder der linken Flanken fertig bearbeitet und ggf. die linken bzw. rechten Flanken vorbearbeitet. Dann werden in einem zweiten Schritt, nachdem die Maschineneinstellung verändert wurde, die im ersten Schritt nicht fertig bearbeiteten Flanken fertig bearbeitet. Dabei wird neben der gewünschten Flankengeometrie auch die gewünschte Lückenweite erzielt. Ein Grund für das Anwenden eines Semi-Completing-Verfahrens wird bisher darin gesehen, dass die Geometrie der Flanken freier gestaltet werden kann. D.h. es sind einfacher als beim Completing-Verfahren, bei dem die rechten und linken Flanken in einem Arbeitsgang gleichzeitig fertig gestellt werden, sogenannte Flankenmodifikationen möglich. Außerdem kann beim Semi-Completing-Verfahren auch die Zahndicke einfach korrigiert werden, indem die Lückenweite durch ein Verdrehen des Werkstücks verändert wird.

Das Semi-Completing-Verfahren ist für Kegelräder ursprünglich vom Schleifen im Einzelteilverfahren von im Zyklo-Palloid®-Verfahren vorgefrästen Verzahnungen bekannt.

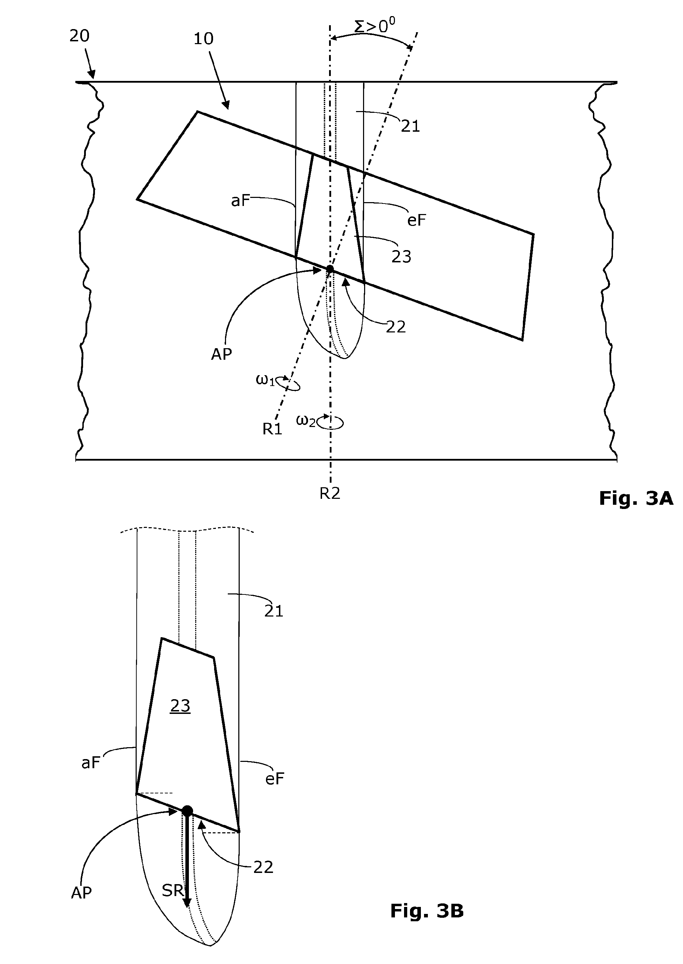

Eigene Untersuchungen des Wälzschälverfahrens haben gezeigt, dass es je nach Auslegung der Wälzschälwerkzeuge 10 zu einem deutlichen Verschleiß des Wälzschälwerkzeugs 10 kommen kann. Genauere Betrachtungen zeigen, dass beim Wälzschälen die Spanungsbedingungen an den einlaufenden Flankenschneiden eF und an den auslaufenden Flankenschneiden aF stark unterschiedlich sein können, wie anhand der Figuren 3A und 3B erläutert wird. Fig. 3A zeigt eine schematische Darstellung eines Schälrads 10 mit konischer Außenkontur im Eingriff mit einer geradverzahnten Innenverzahnung eines Werkstücks 20 beim Wälzschälen in einer Achskreuzprojektion. Es wurde ein positiver Achskreuzwinkel $\Sigma$ vorgegeben. Der Übersichtlichkeit halber sind nur ein Schneidzahn 23 des Schälrads 10 und eine Zahnlücke 21 des Werkstücks 20 gezeigt. Fig. 3A zeigt in einer Momentaufnahme wie sich der Schneidzahn 23 durch das Material des Werkstücks 20 arbeitet. Ein Teil einer Zahnlücke 21 wurde bis zum aktuellen Fertigungszeitpunkt bereits erzeugt. Am Schneidzahn 23 erkennt man die konstruktiven Freiwinkel. Die Spanfläche 22 des Schneidzahns 23 ist ohne Steigungswinkel (Treppenwinkel) ausgeprägt. Beim Wälzschälen ändern sich die Spanbildungsbedingungen kontinuierlich während des Abtragens eines jeden einzelnen Spanes. Insbesondere sind die Spanbildungsbedingungen an den Flankenschneiden des Schneidzahns 23 für die einlaufende Zahnflanke eF und die auslaufende Zahnflanke aF unterschiedlich. Teilweise können die Spanbildungsbedingungen sogar stark unterschiedlich sein.

Fig. 3B zeigt Details des in Fig. 3A gezeigten Fertigungszeitpunkts in einer vergrößerten schematischen Darstellung. Anhand von Fig. 3B kann man die unterschiedlichen effektiven Spanwinkel an der einlaufenden Zahnflanke eF und der auslaufenden Zahnflanke aF erkennen. Der Spanwinkel an der auslaufenden Zahnflanke aF ist negativ und der Spanwinkel an der einlaufenden Zahnflanke eF positiv. In Fig. 3B ist auch die Schnittrichtung SR am Auslegungspunkt AP angedeutet.

Genauere Betrachtungen haben ergeben, dass beim Wälzschälen der positive effektive Spanwinkel an der einlaufenden Zahnflanke eF typischerweise während des Abtragens eines einzelnen Spanes nur moderat abnimmt. Der negative effektive Spanwinkel an der auslaufenden Zahnflanke aF hingegen fällt typischerweise während des Abtragens eines einzelnen Spanes signifikant. Es können, ähnlich wie bei dem effektiven Kopfspanwinkel am Schneidzahn 23, stark negative effektive Spanwinkel (von bis zu -60°) auftreten.

Diese Unterschiede der Spanbildungsbedingungen an den einlaufenden Zahnflanken eF und den auslaufenden Zahnflanken aF führen nicht nur zu unterschiedlich starkem Verschleiß am Wälzschälwerkzeug, sondern sie können auch einen Einfluss auf die Qualität der erzeugten Zahnflanken haben.

Das Kippen der Spanfläche 22 mittels eines Treppenwinkels (auch Spanflächensteigungswinkel genannt) würde es ermöglichen die effektiven Spanwinkel zwischen einlaufender Zahnflanke eF und auslaufender Zahnflanke aF zu Beginn des Abtragens eines jeden einzelnen Spanes auszugleichen. Die Spanfläche 22 kann dazu beispielsweise senkrecht zur Schnittrichtung SR im Auslegungspunkt AP orientiert werden. Dann sind die effektiven Spanwinkel zu Beginn des Abtragens eines einzelnen Spanes an allen Teilen der Flankenschneiden ca. 0°. Durch einen zusätzlichen Kalottenschliff können diese Winkel auch leicht positiv gestaltet werden. Jedoch bleibt die problematische Verfahrenseigenheit des Wälzschälens erhalten, dass der effektive Spanwinkel an der auslaufenden Zahnflanke aF wesentlich stärker fällt als an der einlaufenden Zahnflanke eF.

Weiterhin ist für das Wälzschälen charakteristisch, dass der von der einlaufenden Zahnflanke eF abgetragene Teil des Spanes dünner ausfällt als der von der auslaufenden Zahnflanke aF abgetragene Teil des Spanes. Auch diese Verfahrenseigenheit des Wälzschälens ist problematisch.

Die unterschiedlichen Spanbildungsbedingungen an ein- und auslaufender Zahnflanke eF und aF schlagen sich gegebenenfalls in unterschiedlicher Qualität der erzeugten Zahnflanken nieder, sowie in unterschiedlicher Belastung der korrespondierenden Flankenschneiden am Wälzschälwerkzeug 10.

Es werden daher Lösungen gesucht, die es ermöglichen die Oberflächenqualität der rechten und linken Zahnflanken möglichst gleich zu gestalten und dabei zu verbessern.

Ausserdem werden Lösungen gesucht, die es ermöglichen den Verschleiß der Wälzschälwerkzeuge zu reduzieren, respektive die Standzeit der Wälzschälwerkzeuge zu verbessern. Durch einen reduzierten Verschleiß wird das Wälzschälverfahren wirtschaftlicher, da die Herstellkosten beim Verzahnen von Werkstücken wesentlich durch die Werkzeugstandzeiten beeinflusst werden.

Aufgabe der vorliegenden Erfindung ist es daher, ein Wälzschälverfahren und ein Wälzschälwerkzeug zum Wälzschälbearbeiten der Zahnflanken eines Zahnrades oder anderer periodischer Strukturen bereitzustellen, das sich durch eine Verbesserung der Oberflächenqualität der Zahnflanken auszeichnet.

Diese Aufgabe wird gemäß der vorliegenden Erfindung durch ein Verfahren gelöst, das hier als Semi-Completing-Wälzschälverfahren mit Verstellung des Achskreuzwinkels bezeichnet wird. Dabei ist die Freiheit bei der Gestaltung des Schnittprozesses, genauer gesagt der Spanbildungsbedingungen, der Fokus der erfindungsgemässen Lösung.

D.h., die Aufgabe wird gemäß der vorliegenden Erfindung durch ein Wälzschälverfahren gelöst, das auf dem Prinzip des Semi-Completing-Verfahrens beruht, aber bei einer ersten Wälzschälbearbeitung eines Werkstückes mit einem ersten Achskreuzwinkel und bei einer zweiten Wälzschälbearbeitung des Werkstückes mit einem zweiten Achskreuzwinkel arbeitet, wobei sich die beiden Achskreuzwinkel deutlich unterscheiden. Durch diesen Ansatz werden für die Bearbeitung beider Zahnflanken eines Werkstücks optimale bzw. verbesserte Spanbildungsbedingungen sicher gestellt. D.h. es werden für jede Zahnflanke optimierte Spanbildungsbedingungen vorgegeben, um so die Oberflächenqualität der Zahnflanken zu verbessern.

Kennzeichnend für das Verfahren und die Verwendung der Erfindung ist, dass beim Fertigen zum Beispiel einer Verzahnung die rechten und linken Zahnflanken mit unterschiedlichen Maschineneinstellungen, jedoch mit demselben Werkzeug kontinuierlich unter Anwendung eines Semi-Completing Ansatzes wälzgeschält werden. Primär geht es hier um die Erzeugung von Zahnflanken mit guter Oberflächenqualität, was durch die Kontrolle der Schnittbedingungen, genauer gesagt der Spanbildungsbedingungen, an den Zahnflanken erreicht wird.

Es geht gemäss Erfindung also um ein Semi-Completing-Wälzschälverfahren zur individuellen, d.h. flankenspezifischen Optimierung der Spanbildungsbedingungen. D.h. es geht um ein Verfahren, bei dem Aspekte des Semi-Completings auf ein kontinuierliches Wälzschälverfahren angewendet werden, wobei durch ein zwischenzeitliches Verstellen des Achskreuzwinkels die Spanbildungsbedingungen möglichst optimiert werden.

Das Semi-Completing-Wälzschälverfahren der Erfindung lässt sich im Zusammenhang mit der Herstellung rotationssymmetrischer, periodischer, Strukturen, wie Verzahnungen und dergleichen, einsetzen.

Bei dem Semi-Completing-Wälzschälverfahren kommt ein speziell ausgelegtes Werkzeug zum Einsatz, das hier als Wälzschälwerkzeug bezeichnet wird.

Die Rotationsachse des Werkzeugs ist beim erfindungsgemässen Wälzschälen stets windschief gegenüber der Rotationsachse des Werkstücks angestellt, d.h. der Achskreuzwinkel $\Sigma$ ist stets ungleich Null. Vorzugsweise liegen bei geradverzahnt zu fertigenden Werkstücken der erste Achskreuzwinkel und der zweite Achskreuzwinkel im Wesentlichen symmetrisch zu einer Symmetrieachse, die parallel zu der Werkstück-Rotationsachse verläuft, da die Geradverzahnung ein Sonderfall der Schrägverzahnung ist. Für Schrägverzahnungen gelten etwas andere Bedingungen, wie noch ausgeführt werden wird.

Gemäss Erfindung kommt ein entsprechend ausgelegtes Wälzschälwerkzeug zum Einsatz, das unter zwei deutlich verschiedenen Achskreuzwinkeln eingesetzt werden kann, wobei bei der Auslegung zu beachten ist, dass es für einen gegebenen Werkzeugdurchmesser des Wälzschälwerkzeugs zwei Achskreuzwinkel gibt, die die Schnittrichtungsbedingung für das Wälzschälen erfüllen.

Gemäss Erfindung geht es um ein Verfahren und ein Wälzschälwerkzeug zum Wälzschälen mindestens eines Werkstücks mit rotationssymmetrischer, periodischer Struktur unter Einsatz des Wälzschälwerkzeugs. Es werden die folgenden Schritte ausgeführt, wobei die Reihenfolge der Schritte auch anders sein kann:

- Bereitstellen eines Werkstücks und eines Wälzschälwerkzeugs,

  ■ Anfahren einer ersten Relativposition mit einem ersten Achskreuzwinkel des Wälzschälwerkzeugs in Bezug zum Werkstück,
  ■ Ausführen einer ersten Wälzschälbearbeitung (auch erste Bearbeitungsphase genannt) des Werkstücks, wobei während der ersten Wälzschälbearbeitung unter Beibehaltung des ersten Achskreuzwinkels entweder alle rechten oder alle linken Flanken der periodischen Struktur des Werkstücks fertig bearbeitet und die jeweils anderen Flanken gegebenenfalls (je nach dem, ob es sich um einen Wälzschälbearbeitung aus dem Vollen oder um eine Hartbearbeitung handelt) vorbearbeitet werden,
  ■ Anfahren einer zweiten Relativposition mit einem zweiten Achskreuzwinkel des Wälzschälwerkzeugs in Bezug zum Werkstück, wobei der zweite Achskreuzwinkel sich deutlich von dem ersten Achskreuzwinkel unterscheidet,
  ■ Ausführen einer zweiten Wälzschälbearbeitung (auch zweite Bearbeitungsphase genannt) des Werkstücks, wobei während der zweiten Wälzschälbearbeitung unter Beibehaltung des zweiten Achskreuzwinkels diejenigen Flanken der periodischen Struktur des Werkstücks fertig bearbeitet werden, die zuvor während der ersten Wälzschälbearbeitung noch nicht oder nur (je nach dem, ob es sich um einen Wälzschälbearbeitung aus dem Vollen oder um eine Hartbearbeitung handelt) vorbearbeitet wurden.

Bei geradverzahnten Werkstücken sind der Betrag des ersten Achskreuzwinkels und der Betrag des zweiten Achskreuzwinkels vorzugsweise gleich, d.h. der erste Achskreuzwinkel und der zweite Achskreuzwinkel unterscheiden sich nur durch das Vorzeichen.

Bei schrägverzahnten Werkstücken sind der Betrag des ersten Achskreuzwinkels und der Betrag des zweiten Achskreuzwinkels in der Regel unterschiedlich und die Vorzeichen der beiden Achskreuzwinkel können gleich oder unterschiedlich sein.

Gemäss Erfindung wird im Zusammenhang mit dem Verstellen des Achskreuzwinkels auch eine Drehrichtungsumkehr vorgenommen, wenn der erste und der zweite Achskreuzwinkel unterschiedliche Vorzeichen haben.

Es ist hier anzumerken, dass die rotationssymmetrischen, periodischen Strukturen der Werkstücke nicht unbedingt symmetrische Zähne, bzw. symmetrische Zahnlücken, Nuten oder Rillen aufweisen müssen. Im Folgenden sind der Einfachheit halber Werkstücke mit symmetrischen Zähnen gezeigt und beschrieben. Die Erfindung lässt sich aber auch auf asymmetrische Strukturen anwenden.

Die Erfindung kann sowohl zum Bearbeiten von aussen- und innenliegenden periodischen Strukturen und insbesondere auch zum Bearbeiten von Aussen- wie Innenverzahnungen eingesetzt werden.

Kennzeichnend für das Wälzschälen der Erfindung ist bei allen Ausführungsformen, dass die relativen Bewegungsabläufe (Relativbewegungen genannt) zwischen Werkstück und Werkzeug so vorgegeben und ausgeführt werden, dass am Werkstück fortschreitend Material abgetragen wird bis die Zähne oder die anderen periodischen Strukturen ausgebildet (bei einer Weichbearbeitung aus dem Vollen) oder fertig bearbeitet (bei einer Hartbearbeitung) sind.

Die Erfindung eignet sich unter anderem für das Vorverzahnen, dass heißt für die Bearbeitung im Vollen. Bei dem erfindungsgemässen Vorverzahnen werden während der ersten Wälzschälbearbeitung unter Beibehaltung des ersten Achskreuzwinkels z.B. linke Flanken nur vorbearbeitet und rechte Flanken fertig bearbeitet und während der zweiten Wälzschälbearbeitung unter Beibehaltung des zweiten Achskreuzwinkels nur die linken Flanken fertig bearbeitet. Oder es werden während der ersten Wälzschälbearbeitung unter Beibehaltung des ersten Achskreuzwinkels linke Flanken fertig bearbeitet und rechte Flanken nur vorbearbeitet und während der zweiten Wälzschälbearbeitung unter Beibehaltung des zweiten Achskreuzwinkels nur die rechten Flanken fertig bearbeitet.

Das erfindungsgemässe Verfahren ist besonders für die Hartbearbeitung geeignet, da dort in jeder Bearbeitungsphase nur linke oder rechte Flanken bearbeitet werden und dadurch die Optimierungsmöglichkeit größer ist als beim Vorverzahnen. Bei der erfindungsgemässen Hartbearbeitung werden während der ersten Wälzschälbearbeitung unter Beibehaltung des ersten Achskreuzwinkels z.B. nur linke Flanken bearbeitet und während der zweiten Wälzschälbearbeitung unter Beibehaltung des zweiten Achskreuzwinkels nur rechte Flanken bearbeitet. Oder es werden während der ersten Wälzschälbearbeitung unter Beibehaltung des ersten Achskreuzwinkels nur rechte Flanken bearbeitet und während der zweiten Wälzschälbearbeitung unter Beibehaltung des zweiten Achskreuzwinkels nur linke Flanken bearbeitet.

Bei dem erfindungsgemässen Wälzschälen handelt es sich um ein kontinuierliches, spanabhebendes Verfahren.

Gemäss Erfindung kann der relativen Vorschubbewegung des Wälzschälwerkzeugs in jeder Bearbeitungsphase eine radiale Bewegung überlagert sein, um z.B. die Balligkeit der Zähne, gemäss der technischen Lehre der deutschen Patentanmeldung DE3915976 A1, zu beeinflussen.

Während des Wälzschälens vollführt das sich drehende Werkzeug eine axiale Vorschubbewegung in Bezug auf das sich drehende Werkstück in Richtung der Werkstück-Rotationsachse, wobei diese axiale Vorschubbewegung gleichsinnig oder gegenläufig zur Schnittrichtung verläuft.

Die Werkzeuge gemäss Erfindung können für alle Ausführungsformen als sogenannte Vollwerkzeuge ausgelegt sein, d.h. es handelt sich um Werkzeuge, die im Wesentlichen einstückig ausgeführt sind. Bei den Vollwerkzeugen sind die Schneidzähne ein integraler Bestandteil des Werkzeugs.

Besonders bevorzugt sind für alle Ausführungsformen der Erfindung Messerkopfwerkzeuge (hier Stabmesser-Werkzeuge genannt), die einen scheiben-, ring- oder tellerartigen Messerkopfgrundkörper haben, der mit Messereinsätzen, vorzugsweise in Form von Stabmessern, bestückt ist. Auch möglich sind Ausführungsformen der Erfindung, die als Schneidplatten-Werkzeuge ausgelegt sind, die einen scheiben-, ring- oder tellerartigen Messerkopfgrundkörper haben, der mit Schneidplatten bestückt ist.

Das Verfahren der Erfindung kann nicht nur unter Einsatz von Aussenwerkzeugen sondern auch unter Einsatz von Innenwerkzeugen ausgeführt werden.

Das Verfahren der vorliegenden Erfindung kann auch mit einem alternierenden Semi-Completing-Wälzschälansatz kombiniert werden, der aus der europäischen Patentanmeldung EP 11181521.3 bekannt ist, die unter dem Titel "SEMI-COMPLETING WÄLZSCHÄLVERFAHREN UND VORRICHTUNG MIT ENTSPRECHENDEM WÄLZSCHÄLWERKZEUG ZUM AUSFÜHREN EINES SEMI-COMPLETING WÄLZSCHÄLVERFAHRENS" am 15. September 2011 beim Europäischen Patentamt eingereicht wurde.

Die Erfindung bietet gegenüber dem konventionellen Semi-Completing-Wälzschälen eine Reihe von Vorteilen, die im Folgenden zusammenfassend aufgeführt sind:

- ausgeglichene und verbesserte Oberflächenqualität der Zahnflanken wegen der Möglichkeit die Schnittbedingungen getrennt zu optimieren.

Insbesondere bei der Hartbearbeitung können sich, je nach Ausgestaltung des erfindungsgemässen Verfahrens, auch die folgenden Vorteile ergeben:

- längere Standzeit der Werkzeuge;
- geringere Werkzeugstückkosten;
- reduziertes Werkzeugversagen;
- bessere Wirtschaftlichkeit.

Das erfindungsgemässe Verfahren kann sowohl im Zusammenhang mit einer Trocken- als auch einer Nassbearbeitung durchgeführt werden.

ZEICHNUNGEN

Weitere Einzelheiten und Vorteile der Erfindung werden im Folgenden anhand von Ausführungsbeispielen und mit Bezug auf die Zeichnung beschrieben. In allen schematischen Zeichnungen sind, der Einfachheit der Darstellung halber, Werkstück und Wälzschälwerkzeug auf die Situation am Wälzkreis (bzw. am Werkstück auf den Wälzzylinder) reduziert. Die dargestellten Verhältnisse gelten aber auch für die ganze Verzahnung mit einer Zahnhöhe.

**FIG. 1**      zeigt eine schematische Darstellung eines Stossrads mit zylindrischer Außenkontur im Eingriff mit einem außenverzahnten Werkstück beim Wälzstossen;

**FIG. 2A**      zeigt eine schematische Darstellung eines geradverzahnten Schälrads mit zylindrischer Außenkontur im Eingriff mit einem außenverzahnten Werkstück beim Wälzschälen;

**FIG. 2B**      zeigt eine schematische Darstellung eines schrägverzahnten Schälrads mit konischer Außenkontur im Eingriff mit einem außenverzahnten Werkstück beim Wälzschälen in einer Achskreuzprojektion;

**FIG.3A**      zeigt eine schematische Darstellung eines Schälrads mit konischer Außenkontur im Eingriff mit einer geradverzahnten Innenverzahnung eines Werkstück beim Wälzschälen in einer Achskreuzprojektion, wobei nur ein Schneidzahn des Schälrads gezeigt ist;

**FIG. 3B**      zeigt Details von Fig. 3A in einer schematischen Darstellung, wobei die unterschiedlichen effektiven Spanwinkel an der einlaufenden und der auslaufenden Zahnflanke zu erkennen sind;

**FIG.4A**      zeigt eine schematische Darstellung eines Schälrads mit konischer Außenkontur im Eingriff mit einer geradverzahnten Innenverzahnung eines ersten Werkstücks beim Wälzschälen in einer Achskreuzprojektion, wobei nur ein Schneidzahn des Schälrads gezeigt ist und hier ein positiver Achskreuzwinkel von ca. +25 Grad vorgegeben wurde;

**FIG.4B**      zeigt eine schematische Darstellung einer zu Fig. 4A spiegelsymmetrischen Situation mit einem Schälrad mit konischer Außenkontur im Eingriff mit einer geradverzahnten Innenverzahnung eines zweiten Werkstücks beim Wälzschälen in einer Achskreuzprojektion, wobei nur ein Schneidzahn des Schälrads gezeigt ist und hier ein negativer Achskreuzwinkel von ca. -25 Grad vorgegeben wurde;

**FIG. 5A**      zeigt eine schematische Darstellung einer grafischen Überlagerung der beiden gespiegelten Schälräder nach Fig. 4A und Fig. 4B, wobei die Flankenschneiden zum Bearbeiten der jeweils einlaufenden Zahnflanken nun zu einem vereinten Schneidzahn (hier fett umrandet) zusammen gelegt wurden;

**FIG. 5B**      zeigt eine schematische Darstellung des vereinten Schneidzahns nach Fig. 5A in einer Stirnansicht;

**FIG. 5C**      zeigt eine schematische Darstellung der grafischen Überlagerung der Flankenschneiden nach Fig. 5A, wobei nun die Kopfschneidenbreite des vereinten Schneidzahns (hier fett umrandet) verringert wurde, um einen Einsatz dieses erfindungsgemässen Schälrads im Zusammenhang mit der erfindungsgemässen Semi-Completing-Bearbeitung zu ermöglichen;

**FIG. 5D**      zeigt eine schematische Darstellung des Schneidzahns nach Fig. 5C in einer Stirnansicht;

**FIG. 6A**      zeigt eine schematische Darstellung eines ersten erfindungsgemässen Verfahrensschritts (auch erste Wälzschälbearbeitung genannt), wobei ein erfindungsgemässes Schälrad mit positivem ersten Achskreuzwinkel eine erste Zahnlücke aus dem Vollen fertigt, deren rechte einlaufende Zahnflanke hier mit der korrespondierenden Flankenschneide fertig bearbeitet und linke auslaufende Zahnflanke mit der korrespondierenden Flankenschneide vorbearbeitet wird;

**FIG. 6B**      zeigt eine schematische Darstellung eines zweiten erfindungsgemässen Verfahrensschritts (auch zweite Wälzschälbearbeitung genannt), wobei das erfindungsgemässe Schälrad nach Fig. 6A mit negativem zweitem Achskreuzwinkel die erste Zahnlücke weiter bearbeitet, deren linke einlaufende Zahnflanke hier mit der korrespondierenden Flankenschneide fertig bearbeitet wird, während die anderen Flankenschneide einen Leerschnitt macht;

FIG. 6C zeigt eine stark schematisierte und nicht proportionale Schnittdarstellung des ersten erfindungsgemässen Verfahrensschritts nach Fig. 6A;

FIG. 6D zeigt eine stark schematisierte und nicht proportionale Schnittdarstellung des zweiten erfindungsgemässen Verfahrensschritts nach Fig. 6B;

FIG.7A zeigt eine schematische Darstellung eines weiteren erfindungsgemässen Verfahrensschritts (wiederum erste Wälzschälbearbeitung genannt), wobei ein erfindungsgemässes Schälrad mit positivem erstem Achskreuzwinkel eine erste schrägverzahnte Zahnlücke aus dem Vollen fertigt;

FIG.7B zeigt eine schematische Darstellung eines weiteren erfindungsgemässen Verfahrensschritts (wiederum zweite Wälzschälbearbeitung genannt), wobei das erfindungsgemässe Schälrad nach Fig. 7A mit positivem zweitem Achskreuzwinkel die erste schrägverzahnte Zahnlücke weiter bearbeitet, deren rechte einlaufende Zahnflanke hier mit der korrespondierenden Flankenschneide fertig bearbeitet wird, während die anderen Flankenschneide einen Leerschnitt macht;

FIG.8A zeigt eine perspektivische Darstellung eines zylinderförmigen, aussenverzahnten Werkstücks und eines scheibenförmigen Wälzschälwerkzeugs beim erfindungsgemässen Semi-Completing-Wälzschälen;

FIG. 8B zeigt eine Ausschnittsvergrösserung des zylinderförmigen, aussenverzahnten Werkstücks und des scheibenförmigen Wälzschälwerkzeugs nach Fig. 8A von hinten in einem Moment, in dem beide Flankenschneiden eines jeden Schneidkopfs die linken und rechten Flanken einer entsprechenden Zahnlücke bearbeiten;

FIG. 8C zeigt eine Ausschnittsvergrösserung des zylinderförmigen, aussenverzahnten Werkstücks und des scheibenförmigen Wälzschälwerkzeugs nach Fig. 8A von hinten in einem Moment, in dem nur eine der Flankenschneiden eines jeden Schneidkopfs eine Flanke

einer entsprechenden Zahnlücke bearbeitet und die andere Flankenschneide einen Leerschnitt macht.

DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Rotationssymmetrische, periodische Strukturen sind zum Beispiel Zahnräder (wie Stirnräder) mit Innen- oder Außenverzahnung. Es kann sich aber zum Beispiel auch um Bremsscheiben, Kupplungs- oder Getriebeelemente und dergleichen handeln. Insbesondere geht es um die Herstellung von Ritzelwellen, Schnecken, Elementen für Zahnradpumpen, Ringgelenknaben (Ringgelenke finden zum Beispiel im Kraftfahrzeugsektor Verwendung, um die Kraft von einem Differential auf ein Fahrzeugrad zu übertragen), Keilwellenverbindungen, Schiebemuffen, Riemenscheiben und dergleichen. Die periodischen Strukturen werden hier auch als periodisch wiederkehrende Strukturen bezeichnet.

Im Folgenden ist primär von Zahnrädern, Zähnen und Zahnlücken die Rede. Die Erfindung lässt sich aber auch auf andere Bauteile mit anderen periodischen Strukturen übertragen, wie oben erwähnt. Bei diesen anderen Bauteilen geht es in diesem Fall dann nicht um Zahnlücken sondern zum Beispiel um Nuten oder Rillen.

Da es bei der Erfindung im Wesentlichen um den bereits eingangs beschriebenen Achskreuzwinkel $\Sigma$ geht, wird im Folgenden eine Definition dieses Winkels $\Sigma$ und des Vorzeichens gegeben.

| Achskreuzprojektion | Die Betrachtung von Werkstück und Wälzschälwerkzeug entlang des Gemeinlots der Rotationsachsen R1 und R2 von der Rotationsachse R2 in Richtung der Verzahnung wird als Achskreuzprojektion bezeichnet. Die Figuren 2B, 3A, 4A, 4B, 6A, 6B, 7A, 7B zeigen Achskreuzprojektionen. |
| --- | --- |

(fortgesetzt)

| Achskreuzwinkel | Der Achskreuzwinkel $\Sigma$ ist der betragsmäßig kleinere Winkel, der von den beiden Rotationsachsen R1 und R2 eingeschlossen wird. Er wird in der Achskreuzprojektion sichtbar. Es gilt -90° < $\Sigma$ < 90°, $\Sigma \neq 0°$. |
|---|---|
|  | Der Achskreuzwinkel $\Sigma$ ist vorzeichenbehaftet. Das Vorzeichen ist in der Achskreuzprojektion wie folgt ohne Beschränkung der Allgemeinheit festgelegt: Der Achskreuzwinkel $\Sigma$ ist positiv, wenn die projizierte Rotationsachse R1 um den Achskreuzpunkt mathematisch negativ um den Betrag $\Sigma$ bezüglich der projizierten Rotationsachse R2 verdreht ist. Ansonsten ist er negativ. In Fig. 6A ist z.B. eine Situation mit positivem erstem Achskreuzwinkel $\Sigma^1$ und in Fig. 6B ist z.B. eine Situation mit negativem zweitem Achskreuzwinkel $\Sigma^2$ gezeigt. |
| Effektiver Achskreuzwinkel | Der effektive Achskreuzwinkel $\Sigma_{eff}$ ist der von den beiden Geschwindigkeitsvektoren $\vec{v}_2$ und $\vec{v}_1$ eingeschlossene Winkel gemäß $$\cos(\Sigma_{eff}) = \frac{\vec{v}_2 \cdot \vec{v}_1}{|\vec{v}_2| \|\vec{v}_1\|}.$$ Gemäss Erfindung gilt -90° < $\Sigma_{eff}$ < 90°, $\Sigma_{eff} \neq 0°$. Der effektive Achskreuzwinkel $\Sigma_{eff}$ ist wie der Achskreuzwinkel $\Sigma$ vorzeichenbehaftet. Das Vorzeichen des effektiven Achskreuzwinkels $\Sigma_{eff}$ ist gleich dem Vorzeichen des Achskreuzwinkels $\Sigma$. Für ungeneigte ($\delta = 0$) Wälzschälwerkzeuge ist der effektive Achskreuzwinkel $\Sigma_{eff}$ gleich dem Achskreuzwinkel $\Sigma$. Allgemein gilt $\cos\Sigma = \cos\Sigma_{eff} \cdot \cos\delta$ mit dem Neigungswinkel $\delta$. |

Die Erfindung beruht darauf, dass mit zwei Achskreuzwinkeln (hier erster Achskreuzwinkel $\Sigma^1$ und zweiter Achskreuzwinkel $\Sigma^2$ genannt) gearbeitet wird, die sich deutlich unterscheiden. Der Betrag der Differenz der Achskreuzwinkel beträgt gemäss Erfindung bei allen Ausführungsformen vorzugsweise mindestens 5 Grad und besonders vorzugsweise mehr als 10 Grad.

Im Folgenden wird auch von einer "windschiefen" Lage der beiden Rotationsachsen R1 und R2 gesprochen, wenn der Achskreuzwinkel $\Sigma$ ungleich Null ist. Da der Achskreuzwinkel $\Sigma$ gemäss Erfindung stets ungleich Null ist, sind die beiden Rotationsachsen R1 und R2 bei allen Ausführungsformen windschief angestellt.

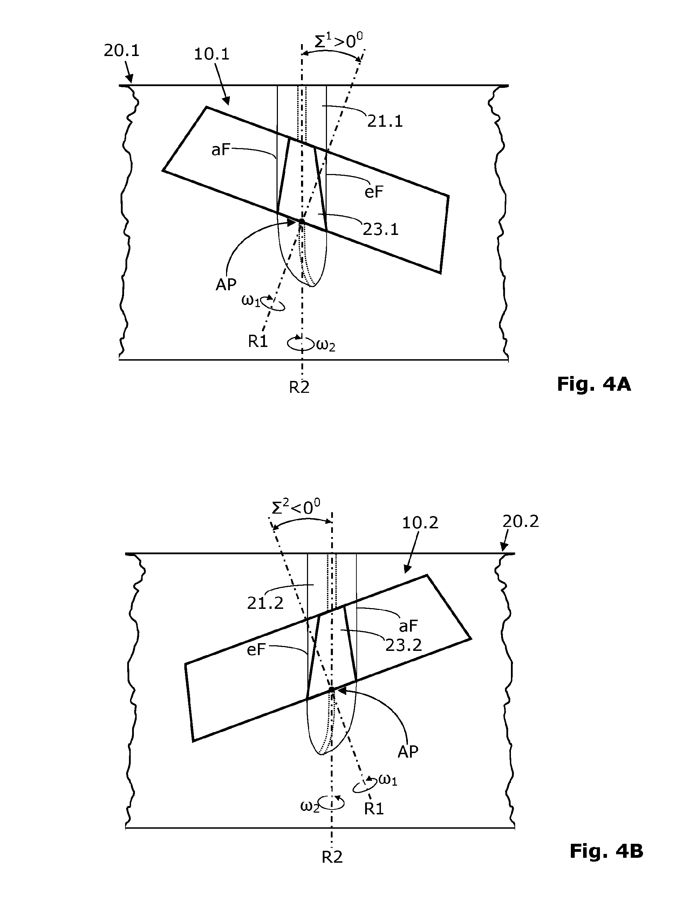

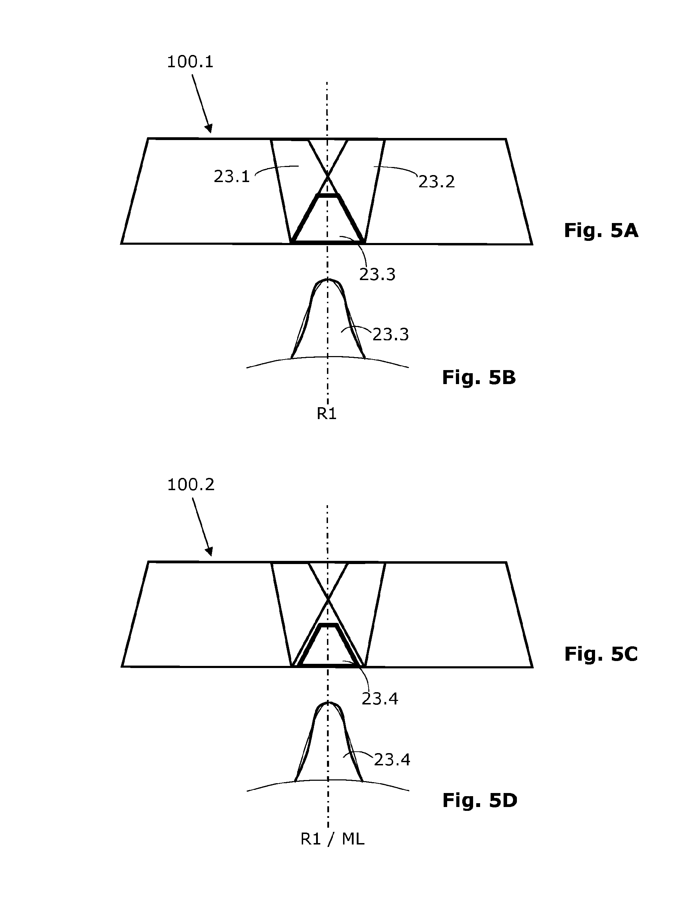

Grundlegende Aspekte des erfindungsgemässen Verfahrens werden im Folgenden unter Bezugnahme auf die stark schematisierten Abbildungen Fig. 4A, 4B sowie Fig. 5A, 5B, 5C, 5D beschrieben. Diese Figuren dienen primär der Herleitung der erfinderischen Lösungen und sich als stark schematisierte Darstellungen zu verstehen.

Damit die Schnittrichtung SR (siehe z.B. Fig. 3B), d.h. der Schnittrichtungsvektor $\vec{v}_c$, im Auslegungspunkt AP in Richtung der zu erzeugenden Lücke 21 liegt, müssen der Schrägungswinkel $\beta_1$ und der Wälzkreisdurchmesser $d_{w1}$ des Wälzschälwerkzeugs für ein festgelegtes Übersetzungsverhältnis $i = n_2 / n_1$ die Bedingung

$$d_{w2} \cdot n_2 \cdot \cos\beta_2 = d_{w1} \cdot n_1 \cdot \cos\beta_1$$

erfüllen. Hierbei sind Wälzkreisdurchmesser $d_{w2}$ und Schrägungswinkel $\beta_2$ des Werkstücks als gegeben zu betrachten. Für einen festen Wälzkreisdurchmesser $d_{w1}$ ergeben sich zwei Möglichkeiten für den Schrägungswinkel $\beta_1$, die sich nur durch das Vorzeichen unterscheiden: $\beta_1^1$ und $\beta_1^2 = -\beta_1^1$. Außerdem muss mit dem effektiven Achskreuzwinkel $\Sigma_{eff}$ die Beziehung $\Sigma_{eff} = \beta_2 + \beta_1$ erfüllt sein, damit die Schnittrichtung SR in Lückenrichtung liegt (vgl. Fig. 3B). Passend zu $\beta_1^1$ und $\beta_1^2$ ergeben sich deshalb zwei mögliche effektive Achskreuzwinkel $\Sigma_{eff}^1$ und $\Sigma_{eff}^2$, unter welchen jeweils mit einem Wälzschälwerkzeug 10 mit dem gleichen Wälzkreisdurchmesser $d_{w1}$ eine Bearbeitung des Werkstücks 20 erfolgen kann. Die jeweiligen herkömmlichen Werkzeuge unterscheiden sich jedoch im Schrägungswinkel $\beta_1$ sowie im Profil. Den beiden effektiven Achskreuzwinkeln $\Sigma_{eff}^1$ und $\Sigma_{eff}^2$ sind auch zwei Achskreuzwinkel $\Sigma^1$ und $\Sigma^2$ mathematisch zugeordnet.

Für $\beta_2 = 0°$, also für ein geradverzahntes Werkstück, gilt $\Sigma^1_{eff} = -\Sigma^2_{eff}$. Hierbei liegt also ein spiegelsymmetrischer Sonderfall vor, wie in den nachfolgenden schematischen Darstellungen der Figuren 4A und 4B gezeigt. Beide Darstellungen in den Figuren 4A und 4B gelten für: $\beta_2 = 0°$, $\delta = 0°$, $\Sigma \approx \pm 25°$.

Fig. 4A zeigt eine schematische Darstellung eines Schälrads 10.1 mit konischer Außenkontur im Eingriff mit einer geradverzahnten Innenverzahnung eines ersten Werkstücks 20.1 beim Wälzschälen in einer Achskreuzprojektion. Es wurde ein erster, hier positiver Achskreuzwinkel $\Sigma^1$ von ca. +25 Grad vorgegeben. Der Übersichtlichkeit halber sind nur ein Schneidzahn 23.1 des Schälrads 10.1 und eine Zahnlücke 21 des Werkstücks 20.1 gezeigt. Fig. 4A zeigt in einer Momentaufnahme wie sich der Schneidzahn 23.1 durch das Material des Werkstücks 20.1 arbeitet. Ein Teil einer Zahnlücke 21.1 wurde bis zum aktuellen Fertigungszeitpunkt bereits erzeugt. Am Schneidzahn 23.1 erkennt man die konstruktiven Freiwinkel, die sich aus der konischen Grundform des Schälrads 10.1 ergeben.

Fig. 4B zeigt eine schematische Darstellung einer zu Fig. 4A spiegelsymmetrischen Situation mit einem Schälrad 10.2 mit konischer Außenkontur im Eingriff mit einer geradverzahnten Innenverzahnung eines zweiten Werkstücks 20.2 beim Wälzschälen in einer Achskreuzprojektion. Es wurde ein zweiter, hier negativer Achskreuzwinkel $\Sigma^2$ von ca. -25 Grad vorgegeben. Das zweite Werkstück 20.2 entspricht dem ersten Werkstück 20.1. Man kann also mit den beiden Schälrädern 10.1 und 10.2 die selben Werkstücke 20.1, 20.2 fertigen, wenn man das erste Werkstück 20.1 mit dem ersten Achskreuzwinkel $\Sigma^1$ (siehe Fig. 4A) und das zweite Werkstück 20.2 mit dem zweiten Achskreuzwinkel $\Sigma^2$ (siehe Fig. 4B) fertigt.

Der Übersichtlichkeit halber sind auch in Fig. 4B nur ein Schneidzahn 23.2 des Schälrads 10.1 und eine Zahnlücke 21.2 des Werkstücks 20.2 gezeigt. Fig. 4B zeigt in einer Momentaufnahme wie sich der Schneidzahn 23.2 durch das Material des Werkstücks 20.2 arbeitet. Ein Teil einer Zahnlücke 21.2 wurde bis zum aktuellen Fertigungszeitpunkt bereits erzeugt. Am Schneidzahn 23.2 erkennt man die konstruktiven Freiwinkel, die sich aus der konischen Grundform des Schälrads 10.2 ergeben.

Man erkennt beim Vergleich der Figuren 4A und 4B, dass in Fig. 4A die rechte Flankenschneide des Schneidzahns 23.1 zum Bearbeiten der einlaufenden Zahnflanke eF und in Fig. 4B die linke Flankenschneide des Schneidzahns 23.2 zum Bearbeiten der einlaufenden Flanke eF mit den jeweils besseren effektiven Spanwinkeln eingesetzt wird.

Die Erfindung basiert nun auf der Erkenntnis, die beiden in den Figuren 4A und 4B dargestellten Werkzeuge 10.1 und 10.2 zunächst in einem virtuellen Wälzschälwerkzeug 100.1 zu vereinen, wie in Fig. 5A und 5B stark schematisiert gezeigt. Die Figuren 5A und 5B zeigen einen Zwischenschritt zur Festlegung eines für das erfindungsgemässe Wälzschälverfahren geeigneten Wälzschälwerkzeugs 100.2 (siehe Fig. 5C und 5D). Das virtuelle Wälzschälwerkzeug 100.1 wird durch eine grafische bzw. rechnerische Überlagerung der beiden Werkzeuge 10.1 und 10.2 "erzeugt". Dabei wird quasi die Vereinigung von zwei Werkzeug(an)teilen der Schneidzähne 23.1 und 23.2 gebildet, wobei die Flankenschneiden, die zum Bearbeiten der einlaufenden Flanken eF eingesetzt werden, übernommen werden. Der resultierende Schneidzahn 23.3 ist in Fig. 5A durch ein fett umrandetes Trapez dargestellt. In Fig. 5B ist eine entsprechende Stirnansicht des resultierenden Schneidzahns 23.3 gezeigt, wobei die endgültigen Flankenschneiden fett dargestellt sind.

Gemäss Erfindung soll ein solches Wälzschälwerkzeug 100.1 nun im Rahmen eines Semi-Completing-Wälzschälverfahrens zum Einsatz kommen, da nur dadurch jeweils die Zahnflanken fertig bearbeitet werden für die der jeweils optimale Achskreuzwinkel benutzt wird. Das Werkzeug 100.1 nach Fig. 5A und 5B eignet sich aber nicht zum Semi-Completing-Wälzschälen, da der Schneidzahn 23.3 eine Breite hat, die der Lückenweite der Zahnlücke entspricht.

Um eine Semi-Completing-Bearbeitung zu ermöglichen, muss somit die Breite des Schneidzahns 23.3 reduziert werden, was anhand der Figuren 5C und 5D erläutert wird. Die Figuren 5C und 5D zeigen einen weiteren Schritt zur Festlegung eines für das erfindungsgemässe Wälzschälverfahren geeigneten Wälzschälwerkzeugs 100.2. Das Wälzschälwerkzeug 100.2 wird aus dem Werkzeug 100.1 der Fig. 5A und 5B abgeleitet, indem die Kopfschneidenbreite reduziert wurde. Durch das Reduzieren der Kopfschneidenbreite erhält man einen Schneidzahn 23.4. Das entsprechende fett umrandete Trapez füllt jetzt nicht mehr die Begrenzungslinien aus, die durch das Überlagern der beiden Werkzeuge 10.1, 10.2 und deren Schneidzähne 23.1, 23.2 erhalten wurden. In Fig. 5D ist eine entsprechende Stirnansicht des resultierenden Schneidzahns 23.4 gezeigt. Der Schneidzahn 23.4 ist etwas "schlanker" als der Schneidzahn 23.3 in Fig. 5B.

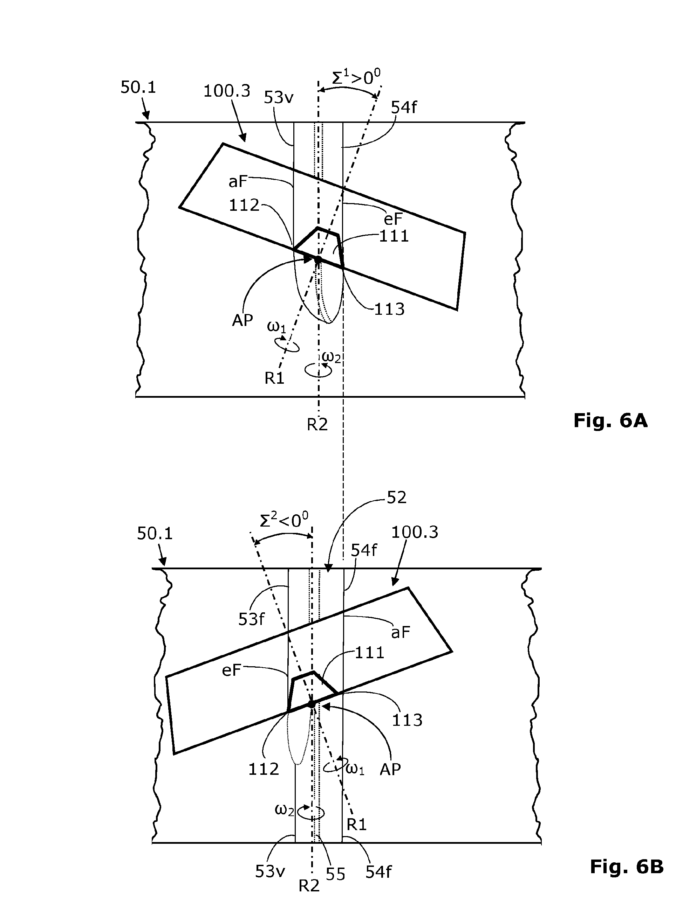

Anhand der Figuren 6A bis 6D wird nun das Grundprinzip des erfindungsgemässen Verfahrens zum Semi-Completing-Wälzschälen eines Werkstücks 50.1 gezeigt und beschrieben, das eine rotationssymmetrische, periodische Struktur aufweist, die fertig bearbeitet wird, oder an dem eine solche Struktur aus dem Vollen gefertigt werden soll. Beim erfindungsgemässen Verfahren kommt ein spezielles Wälzschälwerkzeug 100.3 zum Einsatz, das anhand der zuvor beschriebenen Schritte (siehe Figuren 5A bis 5D) berechnet und hergestellt wurde.

Das erfindungsgemässe Verfahren umfasst mindestens die folgenden Schritte, wobei diese Schritte nicht notwendigerweise in der angegebenen Reihenfolge ausgeführt werden müssen:

- Bereitstellen des Werkstücks 50.1,

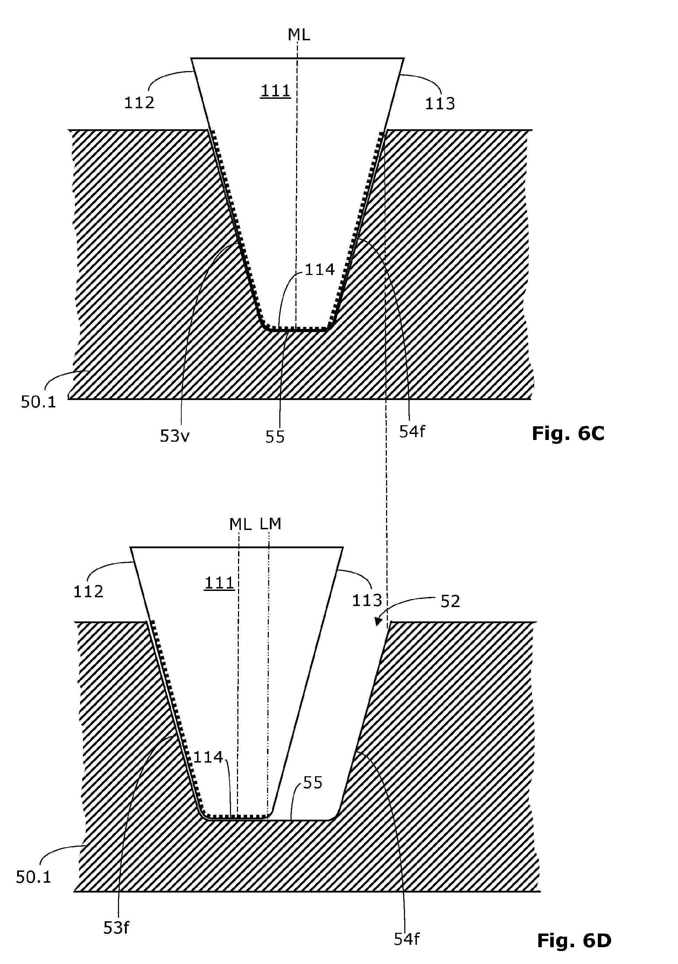

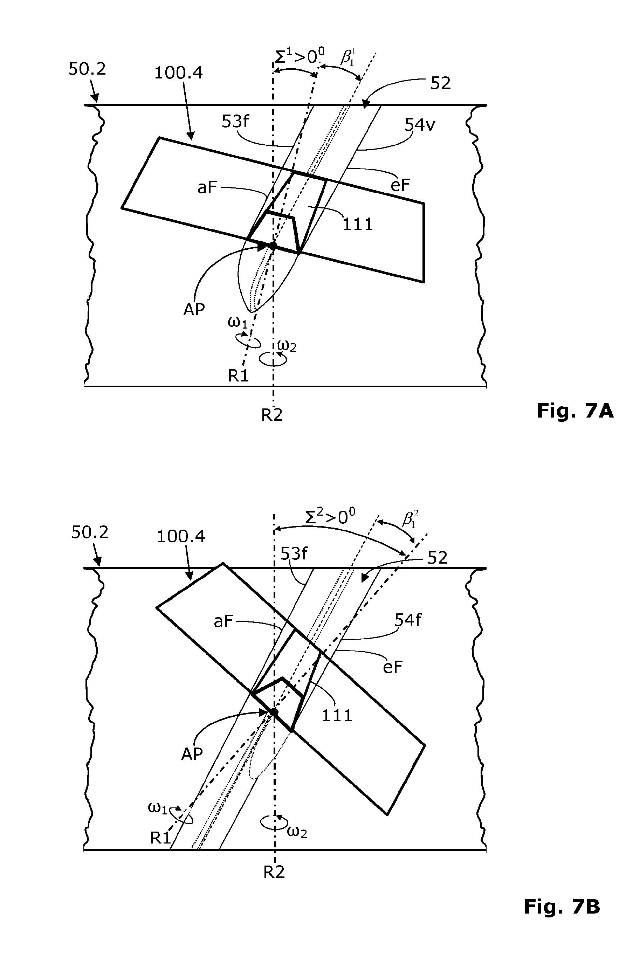

- Bereitstellen des Wälzschälwerkzeugs 100.3, das mehrere Schneidzähne 111, und eine Rotationsachse R1 aufweist. In den Fig. 6A bis 6D ist jeweils nur ein Schneidzahn 111 gezeigt.
- Anfahren einer ersten Relativposition RP1 mit einem ersten Achskreuzwinkels $\Sigma^1$ des Wälzschälwerkzeugs 100.3 in Bezug zum Werkstück 50.1. In dem in Fig. 6A und in dem in Fig. 7A gezeigten Beispiel ist der erste Achskreuzwinkel $\Sigma^1$ jeweils positiv.
- Ausgehend von der ersten Relativposition RP1 wird eine erste Wälzschälbearbeitung des Werkstücks 50.1 ausgeführt, wobei während der ersten Wälzschälbearbeitung der erste Achskreuzwinkel $\Sigma^1$ beibehalten wird. In Fig. 6A ist eine Position gezeigt, die ausgehend von der ersten Relativposition RP1 erreicht wurde. In der ersten Relativposition RP1 befindet sich das Wälzschälwerkzeug 100.3 noch außerhalb des Werkstücks 50.1 und beginnt dann typischerweise eine Vorschubbewegung, bei der auch einmal die in Fig. 6A gezeigte Position durchfahren wird. Während dieser ersten Wälzschälbearbeitung werden entweder alle rechten Flanken (allgemein mit 54 bezeichnet) oder alle linken Flanken (allgemein mit 53 bezeichnet) der periodischen Struktur des Werkstücks 50.1 fertig bearbeitet und die jeweils anderen Flanken 53, 54 vorbearbeitet, oder es wird an den jeweils anderen Flanken 53, 54 ein Leerschnitt durchgeführt. In Fig. 6A und 6C ist eine Situation gezeigt, bei der die linken Flanken vorbearbeitet (wie durch das Bezugszeichen 53v angedeutet, wobei das v für vorbearbeitet steht) und die rechten Flanken fertig bearbeitet werden (wie durch das Bezugszeichen 54f angedeutet, wobei das f für fertig bearbeitet steht).
- Nun wird, nachdem alle Zahnlücken 52 kontinuierlich der ersten Wälzschälbearbeitung unterzogen wurden, eine zweite Relativposition RP2 angefahren und dabei ein zweiter Achskreuzwinkel $\Sigma^2$ des Wälzschälwerkzeugs 100.3 in Bezug zum Werkstück 50.1 eingestellt. Der zweite Achskreuzwinkel $\Sigma^2$ unterscheidet sich deutlich von dem ersten Achskreuzwinkel $\Sigma^1$. In dem in Fig. 6B gezeigten Beispiel ist der zweite Achskreuzwinkel $\Sigma^2$ negativ, wobei $\Sigma^2 = -\Sigma^1$. In dem in Fig. 7B gezeigten Beispiel ist der zweite Achskreuzwinkel $\Sigma^2$ wie der erste Achskreuzwinkel $\Sigma^1$ positiv, jedoch betragsmäßig deutlich größer.
- Ausgehend von der zweiten Relativposition RP2 wird eine zweite Wälzschälbearbeitung des Werkstücks 50.1 ausgeführt, wobei während der zweiten Wälzschälbearbeitung der zweite Achskreuzwinkel $\Sigma^2$ beibehalten wird. In Fig. 6B ist eine Position gezeigt, die ausgehend von der zweiten Relativposition RP2 erreicht wurde. In der zweiten Relativposition RP2 befindet sich das Wälzschälwerkzeug 100.3 noch außerhalb des Werkstücks 50.1 und beginnt dann typischerweise eine Vorschubbewegung, bei der auch einmal die in Fig. 6B gezeigte Position durchfahren wird. Während der zweiten Wälzschälbearbeitung werden diejenigen Flanken der periodischen Struktur des Werkstücks 50.1 fertig bearbeitet (hier die linken Flanken 53), die zuvor während der ersten Wälzschälbearbeitung nur vorbearbeitet oder noch nicht bearbeitet wurden.

Anhand der Figuren 6B und 6D kann man erkennen, dass die Zahnlücke 52 nach der ersten Wälzschälbearbeitung eine Lückenweite hat, die geringer ist als nach der zweiten Wälzschälbearbeitung. In Fig. 6B ist gut zu erkennen, wie sich der Schneidzahn 111 von oben nach unten durch die bereits bei der ersten Wälzschälbearbeitung vorbearbeitete Lücke 52 schiebt. Oberhalb des Werkzeugs 100.3 ist die Lücke 52 bereits fertig und wird daher von den fertig bearbeiteten Flanken 53f und 54f begrenzt. Unterhalb des Werkzeugs 100.3 ist die Lücke 52 noch nicht fertig gestellt und wird daher von den vorbearbeiteten Flanke 53v und der fertig bearbeiteten Flanke 54f begrenzt.

Gemäss Erfindung umfasst jeder der Schneidzähne 111 eine erste Flankenschneide 113 zum Schneiden der rechten Flanken 54, eine zweite Flankenschneide 112 zum Schneiden der linken Flanken 53 und eine Kopfschneide 114, die in einem Übergangsbereich zwischen der ersten Flankenschneide 113 und der zweiten Flankenschneide 112 liegt und den Zahnfuss 55 bearbeitet.

Hier ist verschiedentlich von einer ersten Relativposition RP1 und einer zweiten Relativposition RP2 die Rede. Ausserdem wird das Anfahren dieser Relativposition RP1 oder RP2 beschrieben. Diese beiden Relativpositionen RP1 und RP2 unterscheiden sich in jedem Fall durch die Achskreuzwinkel $\Sigma^1$ und $\Sigma^2$. Zusätzlich können sich die beiden Relativpositionen RP1 und RP2 aber auch durch andere Einstellwerte (wie z.B. die Drehrichtung usw.) unterscheiden. In der jeweiligen Relativposition RP1 oder RP2 befindet sich das Wälzschälwerkzeug 100.3 oder 100.4 noch außerhalb des Werkstücks 50.1 oder 50.2.

Hilfsweise sind folgende Linien eingezeichnet, um in den Fig. 6C und 6D die Relativlagen des Wälzschälwerkzeugs 100.3 und Werkstücks 50.1 erkennbar zu machen. ML stellt die Mittellinie des Schneidzahns 111 dar. Die Mittellinie ML entspricht bei Werkzeugen 100.3, die zum Verzahnen von geradzuverzahnenden Werkstücken 50.1 ausgelegt sind, der Mittellinie des Schneidzahns 111. Die gedachte Lückenmitte der zu fertigenden Zahnlücke 52 ist durch die Linie LM angezeigt. Eine dicke, punktierte Linie zeigt in schematisierter Form diejenigen Abschnitte (Flanken) des Schneidzahns 111, die im gezeigten Moment Material am Werkstück 50.1 abtragen. In Fig. 6C wird durch die beiden Flankenschneiden 112 und 113 Material an den Zahnflanken 53v, 54f sowie durch die komplette Kopfschneide Material am Zahnfuss 55 abgetragen, wie durch die erwähnte dicke, punktierte Linie gezeigt. In Fig. 6D wird nur noch durch die linke Flankenschneide 112 Material an der Zahnflanke 53v sowie durch die komplette Kopfschneide Material am Zahnfuss 55 abgetragen, wie durch die erwähnte dicke, punktierte Linie gezeigt.

Die Kopfschneide 114 hat bei allen Ausführungsformen eine Breite, die kleiner ist als die Lückenweite am Zahnfuss 55 der am Werkstück 50.1 zu fertigenden Lücken 52, wie anhand der Fig. 5C erläutert wurde.

Bei der Bearbeitung von geradverzahnten Werkstücken 50.1 nach dem in den Figuren 6A bis 6D gezeigten Prinzip ist im Zusammenhang mit dem Verstellen des Achskreuzwinkels von $\Sigma^1$ zu $\Sigma^2$ eine Drehrichtungsumkehr für Werkstück 50.1 und Werkzeug 100.3 notwendig, da sich die Achskreuzwinkel $\Sigma^1$ und $\Sigma^2$ in dem gezeigten Beispiel durch das Vorzeichen unterscheiden. Dass heißt, Werkstück 50.1 und Werkzeug 100.3 drehen sich nach der Drehrichtungsumkehr umgekehrt wie vorher. Die Drehrichtungsumkehr ist in den Figuren 6A und 6B durch unterschiedlich gerichtete Winkelgeschwindigkeiten $\omega_1$ und $\omega_2$ dargestellt. Die Drehrichtungsumkehr ist durch das Ersatzgetriebe festgelegt, das bei der Festlegung der geometrischen Zusammenhänge eine wichtige Rolle spielt.

Falls die Vorzeichen der beiden Achskreuzwinkel $\Sigma^1$ und $\Sigma^2$ gleich sind, ist keine Drehrichtungsumkehr erforderlich.

Gemäss Erfindung werden durch CNC-gesteuerte Antriebe (nicht gezeigt) während der ersten Wälzschälbearbeitung das Wälzschälwerkzeug 100.3 in einer ersten Drehrichtung mit der Winkelgeschwindigkeit $\omega_1$ um die Rotationsachse R1 und das Werkstück 50.1 in einer zweiten Drehrichtung mit der Winkelgeschwindigkeit $\omega_2$ um die Werkstück-Rotationsachse R2 gedreht. Nach der Drehrichtungsumkehr werden durch die CNC-gesteuerte Antriebe bei der zweiten Wälzschälbearbeitung das Wälzschälwerkzeug 100.3 in einer zur ersten Drehrichtung umgekehrten Richtung (Winkelgeschwindigkeit $-\omega_1$) um die Rotationsachse R1 und das Werkstück 50.1 in einer zur zweiten Drehrichtung umgekehrten Richtung um die Werkstück-Rotationsachse R2 (Winkelgeschwindigkeit $-\omega_2$) gedreht.

Gemäss Erfindung erfolgt ein Übergang von der ersten Relativposition RP1 zu der zweiten Relativposition RP2 mindestens durch das Verstellen des Achskreuzwinkels $\Sigma$ vom ersten Achskreuzwinkel $\Sigma^1$ zum zweiten Achskreuzwinkel $\Sigma^2$.

Gemäss Erfindung werden jeweils während der ersten Wälzschälbearbeitung und der zweiten Wälzschälbearbeitung des Werkstücks 50.1 folgende (Detail-)Schritte ausgeführt:

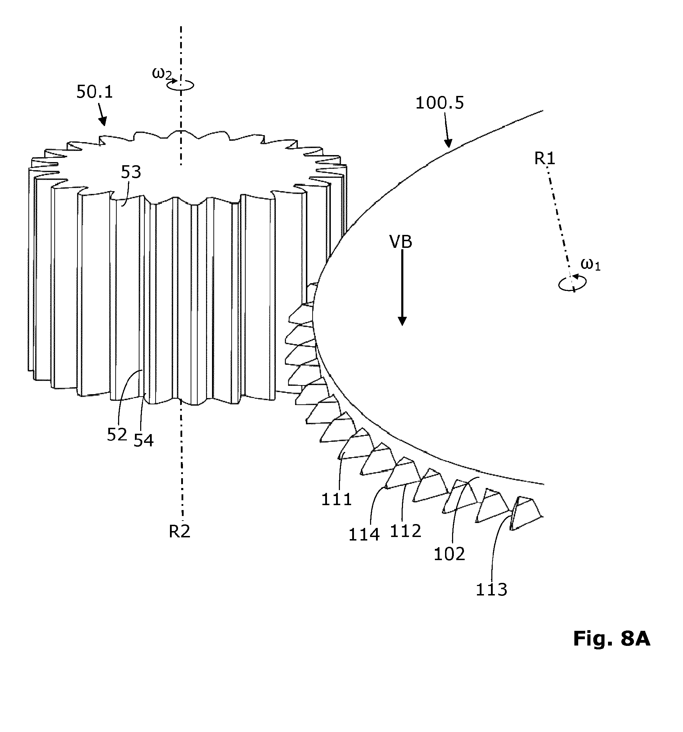

- Drehen des Wälzschälwerkzeugs 100.3 um die Rotationsachse R1 des Wälzschälwerkzeugs 100.3,
- gekoppeltes (durch die CNC-Steuerung) Drehen des Werkstücks 50.1 um die Werkstück-Rotationsachse R2, und
- Ausführen einer axialen Vorschubbewegung VB (VB ist in Fig. 8A gezeigt) des Wälzschälwerkzeugs 100.3 in Bezug zu dem Werkstück 50.1 in einer Richtung parallel zur Werkstück-Rotationsachse R2.

Bisher wurde die Erfindung anhand eines geradverzahnten Werkstücks 50.1 beschrieben. Bei geradverzahnten Werkstücken 50.1 kann für gleiche Schnittgeschwindigkeiten bei der ersten Wälzschälbearbeitung und der zweiten Wälzschälbearbeitung jeweils bei allen Ausführungsformen betragsmäßig mit den gleichen Drehgeschwindigkeiten $\omega_1$ und $\omega_2$ gearbeitet werden, wie man den Figuren 6A und 6B und den hier präsentierten Gleichungen entnehmen kann.

Die Situation bei Schrägverzahnungen lässt sich aus dem Sonderfall der Geradverzahnung wie folgt ableiten.

Bei der Bearbeitung von schrägverzahnten Werkstücken mit ausreichend großem Schrägungswinkel $\beta_1$, können - müssen aber nicht - die beiden Achskreuzungswinkel $\Sigma^1$ und $\Sigma^2$ so gewählt werden, dass die erwähnte Drehrichtungsumkehr nicht notwendig ist, was ein Vorteil ist, da dadurch zum Beispiel ein Zeitgewinn erzielt werden kann. Die beiden deutlich unterschiedlichen Achskreuzungswinkel $\Sigma^1$ und $\Sigma^2$ müssen dazu das gleiche Vorzeichen haben, wie bereits erwähnt.

In diesem Falle ist das Werkzeugprofil des Wälzschälwerkzeugs 100.4 typischerweise unsymmetrisch. Außerdem muss bei schrägverzahnten Werkstücken 50.2 für gleiche Schnittgeschwindigkeiten bei der ersten Wälzschälbearbeitung und der zweiten Wälzschälbearbeitung jeweils mit unterschiedlichen Drehzahlen, respektive Drehgeschwindigkeiten gearbeitet werden. Eine Zahnflanke wird in diesem Falle als einlaufende Flanke eF, die andere Zahnflanke als auslaufende Flanke aF fertig bearbeitet.

Anhand der Figuren 7A und 7B wird nun das Grundprinzip des erfindungsgemässen Verfahrens zum Wälzschälen eines schrägverzahnten Werkstücks 50.2 mit großem Schrägungswinkel gezeigt und beschrieben, das eine rotationssymmetrische, periodische Struktur aufweist, die fertig bearbeitet wird, oder an dem eine solche Struktur aus dem Vollen gefertigt werden soll. Beim erfindungsgemässen Verfahren kommt ein spezielles Wälzschälwerkzeug 100.4 zum Einsatz, das anhand der zuvor beschriebenen Schritte (siehe Figuren 5A bis 5D) berechnet und hergestellt wurde. Das Wälzschälwerkzeug 100.4 hat Schneidzähne 111. Man kann aber auch bei Schrägverzahnungen mit einer Drehrichtungsumkehr bearbeiten. Bei kleinen Schrägungswinkeln muss man sogar mit einer Drehrichtungsumkehr arbeiten.

Das erfindungsgemässe Verfahren umfasst mindestens die folgenden Schritte, wobei diese Schritte nicht notwendigerweise in der angegebenen Reihenfolge ausgeführt werden müssen:

- Bereitstellen des Werkstücks 50.2,
- Bereitstellen des Wälzschälwerkzeugs 100.4, das mehrere schrägverzahnte Schneidzähne 111, und eine Rotationsachse R1 aufweist. In den Fig. 7A und 7B ist jeweils nur ein Schneidzahn 111 gezeigt.
- Anfahren einer ersten Relativposition RP1 (in Fig. 7A gezeigt) mit einem ersten Achskreuzwinkels $\Sigma^1$ des Wälzschälwerkzeugs 100.4 in Bezug zum Werkstück 50.2 (es ist zu beachten, dass die Relativposition RP1 hier nicht der Relativposition RP1 nach Fig. 6A oder 6C entsprechen muss. Auch die Achskreuzwinkel $\Sigma^1$ können sich durch den Betrag und/oder das Vorzeichen unterscheiden). In dem in Fig. 7A gezeigten Beispiel ist der erste Achskreuzwinkel $\Sigma^1$ positiv.

- Ausgehend von der ersten Relativposition RP1 wird eine erste Wälzschälbearbeitung des Werkstücks 50.2 ausgeführt, wobei während der ersten Wälzschälbearbeitung der erste Achskreuzwinkel $\Sigma^1$ beibehalten wird. Während dieser ersten Wälzschälbearbeitung werden entweder alle rechten Flanken (allgemein mit 54 bezeichnet) oder alle linken Flanken (allgemein mit 53 bezeichnet) der periodischen Struktur des Werkstücks 50.2 fertig bearbeitet und die jeweils anderen Flanken 53, 54 werden im gezeigten Beispiel vorbearbeitet. In Fig. 7A ist eine Situation gezeigt, bei der die linken Flanken mit positivem effektivem Spanwinkel fertig bearbeitet (wie durch das Bezugszeichen 53f angedeutet) und die rechten Flanken vorbearbeitet werden (wie durch das Bezugszeichen 54v angedeutet).

- Nun wird, nachdem alle Zahnlücken 52 kontinuierlich der ersten Wälzschälbearbeitung unterzogen wurden, eine zweite Relativposition RP2 (siehe Fig. 7B) angefahren und ein zweiter Achskreuzwinkel $\Sigma^2$ des Wälzschälwerkzeugs 100.4 in Bezug zum Werkstück 50.2 eingestellt. In dem in Fig. 7B gezeigten Beispiel ist der zweite Achskreuzwinkel $\Sigma^2$ wie der erste Achskreuzwinkel $\Sigma^1$ positiv, jedoch betragsmäßig deutlich größer (es ist zu beachten, dass die Relativposition RP2 hier nicht der Relativposition RP2 nach Fig. 6B oder 6D entsprechen muss. Auch die Achskreuzwinkel $\Sigma^2$ können sich durch den Betrag und/oder das Vorzeichen unterscheiden).

- Ausgehend von der zweiten Relativposition RP2 wird eine zweite Wälzschälbearbeitung des Werkstücks 50.2 ausgeführt, wobei während der zweiten Wälzschälbearbeitung der zweite Achskreuzwinkel $\Sigma^2$ beibehalten wird. Während der zweiten Wälzschälbearbeitung werden diejenigen Flanken der periodischen Struktur des Werkstücks 50.2 fertig bearbeitet (hier die linken Flanken 54), die zuvor während der ersten Wälzschälbearbeitung nur vorbearbeitet oder noch nicht bearbeitet wurden. Anhand der Fig. 7B kann man erkennen, dass die Zahnlücke 52 nach der ersten Wälzschälbearbeitung eine Lückenweite hat, die etwas geringer ist als nach der zweiten Wälzschälbearbeitung.

In Fig. 7A, d.h. bei der ersten Wälzschälbearbeitung des Werkstücks 50.2, erfolgt die Bearbeitung der linken Zahnflanke als auslaufende Flanke aF mit positivem effektiven Spanwinkel. In Fig. 7B, d.h. bei der zweiten Wälzschälbearbeitung des Werkstücks 50.2, erfolgt die Bearbeitung der rechten Zahnflanke als einlaufende Flanke eF mit positivem effektiven Spanwinkel.

Das im Zusammenhang mit den Figuren 5A bis 5D gezeigte Prinzip des Überlagerns der Schneidzähne und des Reduzierens der Kopfbreite dieser Schneidzähne kann auch analog auf Schneidzähne angewendet werden, die mit einem Treppenwinkel versehen sind. Man geht dabei für beide Relativpositionen von Schneidzähnen aus, deren jeweilige Spanfläche im Auslegungspunkt etwa normal zur zu erzeugenden Zahnlücke steht. Bei der Zusammenlegung der Schneidzähne können die einen Winkel einschließenden Spanflächen beispielsweise durch Verrundung miteinander verbunden werden. D.h. man erhält eine in Schneidzahnbreitenrichtung gewölbte Spanfläche.

Vorzugsweise werden gemäss Erfindung jeweils beide Zahnflanken der Zahnlücken einer Geradverzahnung als einlaufende Flanken fertig bearbeitet, wie den Figuren 6A und 6B zu entnehmen ist. Unter Umständen ist es auch denkbar, die beiden Flanken als auslaufende Flanken fertig zu bearbeiten. Die konkrete Implementierung des erfindungsgemässen Verfahrens hängt unter anderem von den zu erwartenden Spanungsbedingungen ab.

Das beschriebene Wälzschälverfahren kann bei allen Ausführungsformen trocken oder nass angewendet werden, wobei die Verwendung des Wälzschälens im Trockenen bevorzugt ist.

Das Einsatzspektrum des beschriebenen Wälzschälverfahrens ist groß und erstreckt sich auf die Anwendung bei der Herstellung verschiedenster rotationssymmetrischer periodischer Strukturen.

Die beschriebenen Wälzschälwerkzeuge 100.3, 100.4 sind speziell zum Wälzschälen eines Werkstücks 50.1, 50.2 mit einer rotationssymmetrischen, periodischen Struktur ausgelegt. Zu diesem Zweck kommt ein solches Wälzschälwerkzeug 100.3, 100.4 in einer CNC-gesteuerten Wälzschälmaschine zum Einsatz, die so programmiert und ausgestattet ist, dass sie das hier beschriebene Verfahren auszuführen in der Lage ist.

Fig. 8A zeigt eine perspektivische Darstellung eines zylinderförmigen, aussenverzahnten Werkstücks, das hier wiederum mit dem Bezugszeichen 50.1 bezeichnet ist, und eines scheibenförmigen Wälzschälwerkzeugs 100.5 beim erfindungsgemässen Semi-Completing-Wälzschälen. In dem in Fig. 8A gezeigten Moment ist ein erster Achskreuzwinkel $\Sigma^1$ eingestellt während eine erste Wälzschälbearbeitung des Werkstücks 50.1 durchgeführt wird. Das Wälzschälwerkzeug 100.5 weist eine grössere Anzahl von Schneidzähnen 111 auf, die allesamt an einer Mantelfläche 102 des Wälzschälwerkzeugs 100.5 angeordnet sind und im Wesentlichen radial nach aussen weisen. Jeder der Schneidzähne 111 hat eine erste Flankenschneide 113 zum Schneiden der rechten Flanken 54, eine zweite Flankenschneide 112 zum Schneiden der linken Flanken 53 und eine Kopfschneide 114, die in einem Übergangsbereich zwischen der ersten Flankenschneide 113 und der zweiten Flankenschneide 112 liegt.

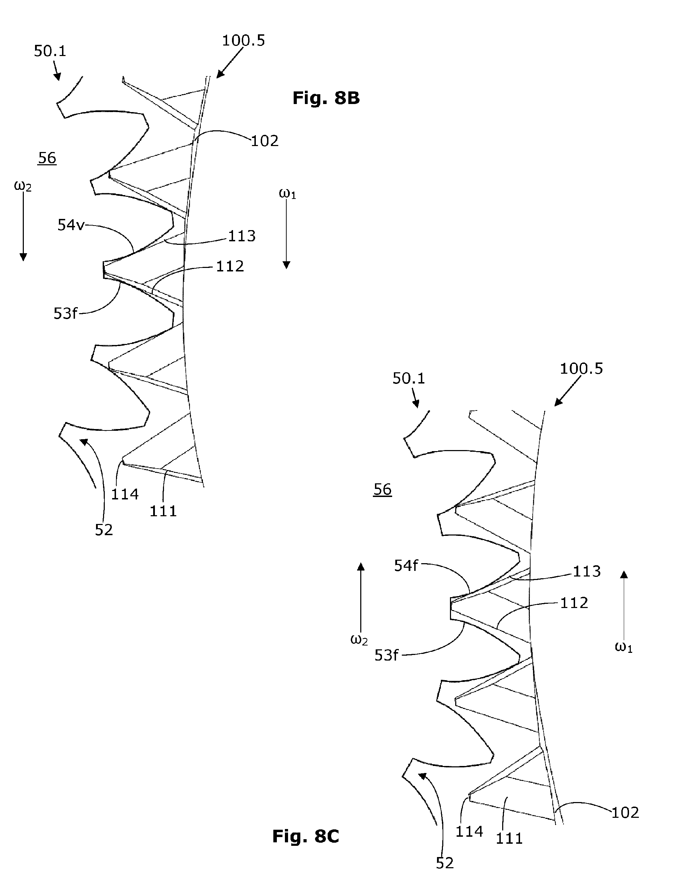

Fig. 8B zeigt eine Ausschnittsvergrösserung des zylinderförmigen, aussenverzahnten Werkstücks 50.1 und des scheibenförmigen Wälzschälwerkzeugs 100.5 nach Fig. 8A von hinten (bzw. bezogen auf Fig. 8A von oben) in einem Moment, in dem beide Flankenschneiden 112, 113 eines Schneidkopfs 111 die linken Flanken 53f und rechten Flanken 54v einer Zahnlücke 52 bearbeiten. Im gezeigten Moment werden eine linke Flanke 53f fertig bearbeitet und eine rechte Flanke 54v vorbearbeitet.

Fig. 8C zeigt eine Ausschnittsvergrösserung des zylinderförmigen, aussenverzahnten Werkstücks 50.1 und des scheibenförmigen Wälzschälwerkzeugs 100.5 nach Fig. 8A von hinten (bzw. bezogen auf Fig. 8A von oben) in einem Moment, in dem nur eine Flankenschneide 113 eines Schneidkopfs 111 eine Flanke 54f einer Zahnlücke 52 bearbeitet und die andere Flankenschneide 112 einen Leerschnitt macht. Die Darstellungen in Fig. 8B und 8C unterscheiden sich insbesondere dadurch, dass in Fig. 8B ein erster Achskreuzwinkel $\Sigma^1$ und in Fig. 8C ein zweiter Achskreuzwinkel $\Sigma^2$ eingestellt ist.

In Fig. 8B (hier auch erste Wälzschälbearbeitung genannt) und in Fig. 8C (hier auch zweite Wälzschälbearbeitung genannt) ist die Blickrichtung die gleiche (in beiden Fällen liegt die Stirnfläche 56 des zylinderförmigen, aussenverzahnten Werkstücks 50.1 in der Zeichenebene. Die Rotationsachse R2 steht senkrecht auf der Zeichenebene und die Blickrichtung verläuft parallel zur Rotationsachse R2. Es wird von hinten (bezogen auf Fig. 8A von oben) auf das Werkzeug 100.5 geschaut, so dass die Spanflächen selbst nicht sichtbar sind, jedoch die Freiflächen der Schneidköpfe 111.

Bezugszeichenliste:

| | |
|---|---|
| Stossrad | 1 |
| Werkstück | 2 |
| Zahnkopf | 4 |
| Zahnbrust | 5 |
| Wälzschälwerkzeug | 10 |
| 1. Wälzschälwerkzeug | 10.1 |
| 2. Wälzschälwerkzeug | 10.2 |
| (wälzgeschältes) Werkstück | 20 |
| erstes (wälzgeschältes) Werkstück | 20.1 |
| zweites (wälzgeschältes) Werkstück | 20.2 |
| Zahnlücke | 21 |
| Spanfläche | 22 |
| Schneidzahn | 23 |
| Schneidzähne | 23.1, 23.2 |
| resultierender Schneidzahn | 23.3 |
| beispielhafter Schneidzahn eines erfindungsgemässen Wälzschälwerkzeugs | 23.4 |
| erstes wälzgeschältes, geradverzahntes Werkstück | 50.1 |
| zweites wälzgeschältes, schrägverzahntes Werkstück | 50.2 |
| Zahnlücke | 52 |
| linke Flanke allgemein | 53 |
| linke Flanke vorbearbeitet | 53v |
| linke Flanke fertig bearbeitet | 53f |
| rechte Flanke allgemein | 54 |
| rechte Flanke vorbearbeitet | 54v |
| rechte Flanke fertig bearbeitet | 54f |
| Zahnfuss | 55 |
| Stirnfläche | 56 |
| Wälzschälwerkzeug | 100 |
| Wälzschälwerkzeug | 100.1 |
| erfindungsgemässes Wälzschälwerkzeug | 100.2 |
| erfindungsgemässes Wälzschälwerkzeug für geradverzahntes Werkstück | 100.3 |

(fortgesetzt)

| | |
|---|---|
| erfindungsgemässes Wälzschälwerkzeug für schrägverzahntes Werkstück | 100.4 |
| erfindungsgemässes Wälzschälwerkzeug für geradverzahntes Werkstück | 100.5 |
| Mantelfläche | 102 |
| Schneidzähne / Schneidköpfe | 111 |
| zweite Flankenschneide / linke Flankenschneide | 112 |
| erste Flankenschneide / rechte Flankenschneide | 113 |
| Kopfschneide | 114 |
| auslaufende Zahnflanke | aF |
| Auslegungspunkt | AP |
| Schrägungswinkel des Werkzeugs | $\beta_1$ |
| Schrägungswinkel des Werkzeugs | $\beta_1^1 \quad \beta_1^2$ |
| Schrägungswinkel des Werkstücks | $\beta_2$ |
| Neigungswinkel | $\delta$ |
| Wälzkreisdurchmesser des Werkzeugs | $d_{w1}$ |
| Wälzkreisdurchmesser des Werkstücks | $d_{w2}$ |
| einlaufende Zahnflanke | eF |
| Übersetzungsverhältnis | I |
| gedachte Lückenmitte | LM |
| Mittellinie | ML |
| Zähnezahl des Werkzeugs | n1 |
| Zähnezahl des Werkstücks | n2 |
| Rotationsachse des Werkzeugs (Werkzeugachse) | R1 |
| Werkstück-Rotationsachse (Werkstückachse) | R2 |
| erste Relativposition | RP1 |
| zweite Relativposition | RP2 |
| Hubbewegung | $S_{hx}$ |
| Axialvorschub | $s_{ax}$ |
| Differentialvorschub | $S_D$ |
| Radialvorschub | $S_{rad}$ |
| Schnittrichtung | SR |
| Achskreuzwinkel | $\Sigma$ |
| erster Achskreuzwinkel | $\Sigma^1$ |
| zweiter Achskreuzwinkel | $\Sigma^2$ |
| effektiver Achskreuzwinkel | $\Sigma_{eff}$ |
| effektive erste und zweite Achskreuzwinkel | $\Sigma_{eff}^1 , \Sigma_{eff}^2$ |
| Vorschubbewegung | VB |
| Betrag der Schnittgeschwindigkeit | $\vec{v}_c$ |
| Schnittgeschwindigkeitsvektor | $\vec{v}_c$ |
| Geschwindigkeitsvektor Wälzschälwerkzeug | $\vec{v}_1$ |
| Geschwindigkeitsvektor Werkstück | $\vec{v}_2$ |
| Rotationsgeschwindigkeit um die Achse R1 | $\omega_1$ |
| Rotationsgeschwindigkeit um die Achse R2 | $\omega_2$ |

**Patentansprüche**

1. Verfahren zum Wälzschälen eines Werkstücks (50.1; 50.2) mit einer Werkstück-Rotationsachse (R2) und mit einer rotationssymmetrischen, periodischen Struktur unter Einsatz eines Wälzschälwerkzeugs (100.3; 100.4; 100.5), mit den folgenden Schritten:

   - Bereitstellen des Werkstücks (50.1; 50.2),
   - Bereitstellen des Wälzschälwerkzeugs (100.3; 100.4; 100.5), das mehrere Schneidzähne (111) aufweist,

   ■ Anfahren einer ersten Relativposition (RP1) mit einem ersten Achskreuzwinkel ($\Sigma^1$) des Wälzschälwerkzeugs (100.3; 100.4; 100.5) in Bezug zum Werkstück (50.1; 50.2),
   ■ Ausführen einer ersten Wälzschälbearbeitung des Werkstücks (50.1; 50.2), wobei während der ersten Wälzschälbearbeitung entweder alle rechten Flanken (54) oder alle linken Flanken (53) der periodischen Struktur des Werkstücks (50.1; 50.2) fertig bearbeitet und die jeweils anderen Flanken (53; 54) vorbearbeitet oder nicht bearbeitet werden,
   ■ Anfahren einer zweiten Relativposition (RP2) mit einem zweiten Achskreuzwinkel ($\Sigma^2$) des Wälzschälwerkzeugs (100.3; 100.4; 100.5) in Bezug zum Werkstück (50.1; 50.2),
   ■ Ausführen einer zweiten Wälzschälbearbeitung des Werkstücks (50.1; 50.2), wobei während der zweiten Wälzschälbearbeitung diejenigen Flanken (53; 54) der periodischen Struktur des Werkstücks (50.1; 50.2) fertig bearbeitet werden, die zuvor während der ersten Wälzschälbearbeitung nur vorbearbeitet oder nicht bearbeitet wurden, und
   wobei sich der erste Achskreuzwinkel ($\Sigma^1$) deutlich von dem zweiten Achskreuzwinkel ($\Sigma^2$) unterscheidet.

2. Verfahren nach Anspruch 1, wobei eine der folgenden Bedingungen gilt:

   - der Betrag des ersten Achskreuzwinkels ($\Sigma_1$) ist gleich dem Betrag des zweiten Achskreuzwinkels ($\Sigma_2$) und der erste Achskreuzwinkel ($\Sigma_1$) hat ein umgekehrtes Vorzeichen wie der zweite Achskreuzwinkel ($\Sigma_2$), oder
   - der Betrag des ersten Achskreuzwinkels ($\Sigma_1$) ist ungleich dem Betrag des zweiten Achskreuzwinkels ($\Sigma_2$) und der erste Achskreuzwinkel ($\Sigma_1$) hat das selbe Vorzeichen wie der zweite Achskreuzwinkel ($\Sigma_2$), oder
   - der Betrag des ersten Achskreuzwinkels ($\Sigma_1$) ist ungleich dem Betrag des zweiten Achskreuzwinkels ($\Sigma_2$) und der erste Achskreuzwinkel ($\Sigma_1$) hat ein umgekehrtes Vorzeichen wie der zweite Achskreuzwinkel ($\Sigma_2$).

3. Verfahren nach Anspruch 1 oder 2, wobei die erste Wälzschälbearbeitung und die zweite Wälzschälbearbeitung des Werkstücks (50.1; 50.2) jeweils folgende Schritte umfasst:

   - Drehen des Wälzschälwerkzeugs (100.3; 100.4; 100.5) um die Rotationsachse (R1) des Wälzschälwerkzeugs (100.3; 100.4; 100.5),
   - gekoppeltes Drehen des Werkstücks (50.1; 50.2) um die Werkstück-Rotationsachse (R2), und
   - Ausführen einer axialen Vorschubbewegung (VB) des Wälzschälwerkzeugs (100.3; 100.4; 100.5) in Bezug zu dem Werkstück (50.1; 50.2) in einer Richtung parallel zur Werkstück-Rotationsachse (R2),
   wobei während der ersten Wälzschälbearbeitung der erste Achskreuzwinkel ($\Sigma_1$) und während der zweiten Wälzschälbearbeitung der zweite Achskreuzwinkel ($\Sigma_2$) beibehalten werden.

4. Verfahren nach Anspruch 1, 2 oder 3, **dadurch gekennzeichnet, dass** ein Übergang von der ersten Relativposition (RP1) zu der zweiten Relativposition (RP2) durch das Verstellen des Achskreuzwinkels ($\Sigma$) vom ersten Achskreuzwinkel (all) zum zweiten Achskreuzwinkel ($\Sigma_2$) erfolgt.

5. Verfahren nach Anspruch 1, 2, 3 oder 4, **dadurch gekennzeichnet, dass** jeder der Schneidzähne (111) eine erste Flankenschneide (113) zum Schneiden der rechten Flanken (54), eine zweite Flankenschneide (112) zum Schneiden der linken Flanken (53) und eine Kopfschneide (114) umfasst, die in einem Übergangsbereich zwischen der ersten Flankenschneide (113) und der zweiten Flankenschneide (112) liegt.

6. Verfahren nach Anspruch 1, 2 oder 3, **dadurch gekennzeichnet, dass** der erste Achskreuzwinkel ($\Sigma^1$) ein umgekehrtes Vorzeichen wie der zweite Achskreuzwinkel ($\Sigma^2$) hat und dass bei der ersten Wälzschälbearbeitung das Wälzschälwerkzeug (100.3) in einer ersten Drehrichtung um die Rotationsachse (R1) des Wälzschälwerkzeugs (100.3) und bei der zweiten Wälzschälbearbeitung das Wälzschälwerkzeug (100.3; 100.4; 100.5) in einer zur ersten Drehrichtung umgekehrten Richtung um die Rotationsachse (R1) gedreht wird.

**7.** Verfahren nach Anspruch 1, 2 oder 3, **dadurch gekennzeichnet, dass** der erste Achskreuzwinkel ($\Sigma^1$) ein umgekehrtes Vorzeichen wie der zweite Achskreuzwinkel ($\Sigma^2$) hat und dass zwischen der ersten Wälzschälbearbeitung und der zweiten Wälzschälbearbeitung eine Drehrichtungsumkehr vorgenommen wird.

**8.** Verfahren nach einem der vorhergehenden Ansprüche 1 - 7, **dadurch gekennzeichnet, dass** der Betrag der Differenz des ersten Achskreuzwinkels ($\Sigma^1$) und des zweiten Achskreuzwinkels ($\Sigma^2$) vorzugsweise mindestens 5 Grad und besonders vorzugsweise mehr als 10 Grad beträgt.

**9.** Verfahren nach einem der vorhergehenden Ansprüche 1 - 7, **dadurch gekennzeichnet, dass** die Wälzschälbearbeitungen an weichen, d.h. an ungehärteten Werkstücken (50.1; 50.2) ausgeführt werden.

**10.** Verwendung eines Wälzschälwerkzeugs (100.3; 100.4; 100.5), das speziell zum Wälzschälen eines Werkstücks (50.1; 50.2) mit einer rotationssymmetrischen, periodischen Struktur ausgelegt ist, in einer CNC-gesteuerten Wälzschälmaschine, die so programmiert und ausgestattet ist, dass sie ein Verfahren nach einem der vorhergehenden Ansprüche 1 - 8 auszuführen in der Lage ist.

**11.** Verwendung nach Anspruch 10, **dadurch gekennzeichnet, dass** das Wälzschälwerkzeug (100.3; 100.4; 100.5) mehrere Schneidzähne (111) mit symmetrischem Werkzeugprofil aufweist, wobei jeder der Schneidzähne (111) symmetrisch zu seiner Mittellinie (ML) ausgelegt ist.

**12.** Verwendung nach Anspruch 10, **dadurch gekennzeichnet, dass** das Wälzschälwerkzeug (100.3; 100.4; 100.5) mehrere Schneidzähne (111) mit asymmetrischem Werkzeugprofil aufweist.

**Fig. 1**

R1

R2

Σ

$\omega_1$

$\vec{v}_2$

$\vec{v}_c$

$\vec{v}_1$

$s_{ax}$

10

20

$\omega_2$

$s_D$

**Fig. 2A**

20

10

Σ

ß₂   ß₁

$\omega_2$

$\omega_1$

ß₂

4

$\vec{v}_2$

ß₂

ß₁

5

ß₁

$\vec{v}_c$

AP   R1

$\vec{v}_1$

R2

**Fig. 2B**

**Fig. 3A**

**Fig. 3B**

**Fig. 4A**

**Fig. 4B**

**Fig. 5A**

**Fig. 5B**

**Fig. 5C**

**Fig. 5D**

Fig. 6A

Fig. 6B

ML

112    111    113

114

50.1

53v    55    54f

**Fig. 6C**

ML LM

112    111    113    52

114    55

50.1

53f    54f

**Fig. 6D**

Fig. 7A

Fig. 7B

**Fig. 8A**

Fig. 8B

Fig. 8C

Europäisches
Patentamt

European
Patent Office

Office européen
des brevets

**EUROPÄISCHER RECHERCHENBERICHT**

Nummer der Anmeldung

EP 11 19 0771

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 174 699 A (FAULSTICH INGO [DE]) 29. Dezember 1992 (1992-12-29) | 1,2,4,5,9 | INV. B23F5/16 |
| A | * das ganze Dokument * | 3,6-8 | B23F21/04 |
| | ----- | | |
| X | DE 20 2011 050054 U1 (KLINGELNBERG AG [CH]) 15. September 2011 (2011-09-15) | 10 | |
| Y | * Absatz [0009] - Absatz [0013] * | 11,12 | |
| | ----- | | |
| X | HÜNECKE C: "Reliable and efficient skiving", GEAR TECHNOLOGY, RANDALL PUBLISHING CO. ELK GROVE, ILLINOIS, US, 1. September 2011 (2011-09-01), Seiten 11-13, XP007920036, ISSN: 0743-6858 * das ganze Dokument * | 10 | |
| | ----- | | |
| Y | DE 26 54 177 A1 (ZAHNRADFABRIK FRIEDRICHSHAFEN) 1. Juni 1978 (1978-06-01) * das ganze Dokument * | 11,12 | RECHERCHIERTE SACHGEBIETE (IPC) B23F |
| | ----- | | |

Der vorliegende Recherchenbericht wurde für alle Patentansprüche erstellt

| Recherchenort | Abschlußdatum der Recherche | Prüfer |
|---|---|---|
| München | 30. März 2012 | Watson, Stephanie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 19 0771

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-03-2012

| Im Recherchenbericht angeführtes Patentdokument | Datum der Veröffentlichung | Mitglied(er) der Patentfamilie | Datum der Veröffentlichung |
|---|---|---|---|
| US 5174699 A | 29-12-1992 | KEINE | |
| DE 202011050054 U1 | 15-09-2011 | KEINE | |
| DE 2654177 A1 | 01-06-1978 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 243514
- DE 3915976 A1

- EP 11181521 A